(19) **Europäisches Patentamt / European Patent Office / Office européen des brevets**

(11) **EP 2 352 775 B1**

(12) **FASCICULE DE BREVET EUROPEEN**

(45) Date de publication et mention
de la délivrance du brevet:
**21.12.2016 Bulletin 2016/51**

(21) Numéro de dépôt: **09756060.1**

(22) Date de dépôt: **06.11.2009**

(51) Int Cl.:
*C08G 18/28* (2006.01)     *C08G 18/65* (2006.01)
*C08G 18/66* (2006.01)     *C08G 18/69* (2006.01)
*C09J 175/04* (2006.01)     *C08G 18/10* (2006.01)

(86) Numéro de dépôt international:
**PCT/IB2009/054945**

(87) Numéro de publication internationale:
**WO 2010/052671 (14.05.2010 Gazette 2010/19)**

(54) **UTILISATION D'UNE COMPOSITION ADHESIVE A BASE DE POLYURETHANE POUR APPLICATIONS CRYOGENIQUES**

VERWENDUNG EINER POLYURETHANKLEBSTOFFZUSAMMENSETZUNG FÜR KRYOGENE ANWENDUNGEN

USE OF A POLYURETHANE ADHESIVE COMPOSITION FOR CRYOGENIC APPLICATIONS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **07.11.2008 FR 0806237**
**09.12.2008 FR 0806893**

(43) Date de publication de la demande:
**10.08.2011 Bulletin 2011/32**

(73) Titulaire: **BOSTIK SA**
**93210 La Plaine Saint Denis (FR)**

(72) Inventeurs:
- **POIVET, Sylwia**
  **F-75015 Paris (FR)**
- **CHARTREL, Jean-François**
  **F-60400 Cuts (FR)**

(74) Mandataire: **Hirsch & Associés**
**137, rue de l'Université**
**75007 Paris (FR)**

(56) Documents cités:
**EP-A- 0 328 808     DE-A1- 2 046 327**
**GB-A- 1 479 728     GB-A- 1 545 061**

**Description**

*Domaine de l'invention.*

La présente invention concerne l'utilisation d'une composition adhésive structurale polyuréthane bi-composante (PU2K) dans des applications cryogéniques, en particulier dans les méthaniers qui transportent des gaz liquéfiés. La présente invention se rapporte donc à l'utilisation d'une composition adhésive ayant une résistance au cisaillement qui est supérieure à 10 MPa mesurée selon la norme ISO 4587 sur toute la gamme de température allant de +40°C à -170°C. En particulier la composition adhésive sert d'élément d'adhésion entre deux substrats pour former une structure multicouche adaptée à assurer l'étanchéité vis-à-vis des gaz et des liquides dans toute la gamme de température allant de +40°C à -170°C.

*Arrière plan technologique de l'invention.*

Dans un méthanier, les cuves dans lesquelles le méthane liquide est stocké, sont constituées de différents matériaux et barrières qui permettent d'assurer l'étanchéité.
Pour le stockage et le transport de méthane liquide à une température de -163°C, une excellente isolation est indispensable. De plus une réduction de l'épaisseur d'isolant est souhaitée pour maximiser le volume transporté.
Dans les nouvelles générations de méthaniers, les cuves étanches et isolantes intégrées dans une structure porteuse, notamment de navire, comportent deux barrières d'étanchéité successives, une barrière primaire au contact avec le produit contenu dans la cuve et une autre barrière, dite secondaire, disposée entre la barrière primaire et la structure porteuse, ces deux barrières d'étanchéité étant alternées avec deux barrières thermiquement isolantes.
La barrière secondaire est destinée à contenir temporairement toute fuite de cargaison liquide qui est susceptible de se produire à travers la barrière primaire.
Ainsi en cas d'avarie (envahissement côté mer ou côté gaz liquéfié), la barrière de confinement doit assurer l'étanchéité au gaz liquéfié, durant au minimum 15 jours (durée maximale pour rejoindre une station de dépotage) et donc résister au contact prolongé à l'eau de mer ou au gaz liquéfié (-163°C).
Pour aboutir aux performances requises par le code gaz international, cette double barrière ou membrane est actuellement constituée par une barrière primaire, en contact avec le gaz liquéfié LNG, actuellement en Inox ou INVAR (Nouvelle conception SC1) et une barrière secondaire dite « de confinement » en INVAR (Technologie NO96) ou plus largement maintenant TRIPLEX® pour les technologies SC1 et MARK III). Cette barrière, en fonctionnement normal est en permanence à une température entre -100 et -120°C.
Aujourd'hui ces membranes TRIPLEX® sont majoritairement fabriquées par HUTCHINSON pour les membranes TRIPLEX® souples et par HANKUK Carbon pour les membranes TRIPLEX® rigides.
Les membranes TRIPLEX sont des membranes composites tissus de verre / aluminium / tissus de verre réalisés en caoutchouc vulcanisé pour le TRIPLEX® souple et en Epoxy-polyamide pour le TRIPLEX® rigide.
La construction de la barrière secondaire est une étape sensible, notamment pour les technologies CS1 et MARK III où l'assemblage des éléments constitutifs de la barrière secondaire de la cuve s'effectue par collage. Selon cette méthode, des pièces de membrane TRIPLEX® rigide (RSB Rigid Secondary Barrier) solidaires de panneaux de mousse en Polyuréthanne renforcée fibres sont assemblées entre elles par des bandes de TRIPLEX® souple (FSB Flexible Secondary Barrier).
L'assemblage de cette barrière secondaire s'effectue principalement en application manuelle avec un adhésif Epoxy semi rigide. En effet par exemple, WO 2007/52961 (voir §30 et figure ref 40) décrit des méthodes de liaison entre les barrières secondaires et les panneaux isolants de barrière primaire en utilisant une colle adhésive en Epoxy.
Par ailleurs, dans le domaine des méthaniers, FR 2822814 décrit un dispositif automatique pour le collage d'une bande dans lequel la liaison entre ces deux types de membrane est effectuée par une colle époxy. Le document cite que cette liaison peut aussi être effectuée par une colle dite polyuréthanne mono-composante (PU1K).
Actuellement, les adhésifs principalement utilisés dans les applications cryogéniques et principalement dans les barrières d'étanchéité des méthaniers, sont les adhésifs de type époxy mais leurs performances en adhésion nécessitent des améliorations et de plus ils présentent l'inconvénient de manquer de flexibilité.

*Résumé de l'invention*

Le but de la présente invention est de fournir une solution adaptée aux contraintes d'assemblage telles que l'adhésion et les propriétés structurales, et aux contraintes d'étanchéité dans les applications industrielles cryogéniques, notamment dans toute la gamme de température allant de -170°C à +40°C.
La demanderesse a maintenant trouvé de façon surprenante que les adhésifs à base de polyuréthane améliorent les performances des structures dans lesquels ils sont intégrés, notamment la flexibilité et l'adhésion dans les applications cryogéniques.

Aussi, l'invention propose l'utilisation d'une composition adhésive polyuréthane bi-composante (PU2K) ayant une résistance au cisaillement supérieure à 10 MPa mesurée selon la norme ISO 4587 sur toute la gamme de température allant de -170°C à +40°C. De préférence cette composition adhésive sert d'élément d'adhésion entre deux substrats pour former une structure multicouche adaptée à assurer l'étanchéité vis-à-vis des gaz et des liquides sur toute la gamme de température allant de -170°C à +40°C.

Cette composition adhésive à base de polyuréthane (PU) trouve plus particulièrement son utilité dans la fabrication des cuves étanches et thermiquement isolantes intégrées dans une structure porteuse, notamment la coque d'un navire destiné au transport par mer des gaz liquéfiés et, en particulier, au transport des gaz naturels liquéfiés (LNG) à forte teneur en méthane.

Cette composition adhésive à base de polyuréthane (PU) peut aussi trouver son utilité dans la fabrication de pièces aéronautiques exposées à des températures particulièrement basses au cours des vols.

Selon un mode préféré la composition adhésive est obtenue par réaction entre une partie A appelée résine et une partie B appelée durcisseur,

La partie A étant représentée par le mélange comprenant les ingrédients :

a) au moins un polyol choisi parmi les polyol polyéthers (a1), les polyols polyesters (a2), les polyols insaturés (a3), les pré polymère polyuréthannes thermoplastiques à terminaisons hydroxyles (a4), chacun des composants a1 à a4 ayant une masse moléculaire moyenne comprise entre 200 et 9000 g/mol et de fonctionnalité OH comprise entre 2 et 4,6 ;
b) au moins un agent de seuil choisi parmi le groupe des amines ou polyamines, primaires ou secondaires ;
c) éventuellement un rallongeur de chaîne choisi parmi le groupe des diols de C2 à C10;
d) des charges inorganiques;
e) au moins un additif choisi parmi le groupe des agents mouillants, des antimousses, des dispersants, des colorants, des agents épaississants, des agents fluidifiants;
f) éventuellement un catalyseur de réticulation à déclenchement thermique;

La partie B étant représentée par la composition comprenant les ingrédients:

g) au moins un pré polymère polyuréthanne à terminaisons NCO de masse moléculaire moyenne comprise entre 840 et 2100 g/mol et de fonctionnalité NCO comprise entre 2 et 4 ;
h) des charges inorganiques ;
i) au moins un additif choisi parmi le groupe des agents épaississants, des agents fluidifiants.

Selon un mode préféré, les proportions des différents ingrédients sont les suivantes :

a) le polyol représente de 20 à 60 % en poids de la partie A, de préférence 23 à 45%;
b) l'agent de seuil représente de 0,4 à 3 % en poids de la partie A, de préférence 0,5 à 1,5%;
c) le rallongeur de chaîne représente de 0 à 10% en poids de la partie A, de préférence 4 à 8% ;
d) les charges inorganiques représentent de 22 à 70% en poids de la partie A, de préférence 35 à 65% ; les charges inorganiques sont réparties entre le tamis moléculaire (2 à 15% en poids dans la partie A, de préférence 10 à 15%) et les charges minérales (20 à 65% en poids de la partie A, de préférence de 25 à 50%).
e) les additifs représentent de 2 à 6 % en poids de la partie A, de préférence 3 à 4%;
f) le catalyseur représente de 0 à 0,05% en poids de la partie A, de préférence 0,01 à 0,04%;
g) le Pré polymère NCO représente de 75 à 100% en poids de la partie B, de préférence 85 à 90%;
h) les charges inorganiques représentent de 0 à 20% en poids de la partie B, de préférence 5 à 15%;
i) les additifs représentent de 0 à 5 % en poids de la partie B, de préférence 1 à 3%;

et le rapport des fonctions NCO (meq/g) de la partie B sur la somme des fonctions réactives OH (meq/g) et NH (meq/g) de la partie A allant de 0,90 à 1,20 de préférence de 1,00 à 1,10.

Selon un mode préféré, le polyol a) de la partie A est au moins un pré polymère polyuréthanne thermoplastique à terminaisons OH (a4) choisi parmi les pré polymères polyuréthannes aliphatiques et aromatiques, et les mélanges de ces composés.

Selon un mode préféré la composition adhésive est obtenue par réaction de la partie A avec la partie B dans un rapport en volume A/B allant de environ 0,85 à environ 1,15 de préférence dans un rapport d'environ 1, et présente une viscosité initiale mesurée selon la norme ISO 2555, comprise entre 27 et 120 Pa.s, de préférence comprise entre 45 et 110 Pa.s ou encore 65 à 100 Pa.s.

Selon un mode préféré le composé b) est représenté par la piperazine et ses dérivés.

Selon un mode préféré le composé a) comprend au moins un polyol végétal de nature hydrophobe, représenté de préférence par l'huile de ricin et le composé d) comprend au moins une charge inorganique revêtue d'un enrobage hydrophobe, de préférence avec un tamis moléculaire.

Selon un mode préféré la composition adhésive a un temps ouvert allant de 90 minutes à 150 minutes, le temps ouvert étant le temps à partir duquel la valeur de résistance en cisaillement mesurée selon la norme ISO 4587 a perdu 20 % de sa valeur initiale.

Selon un mode préféré la composition adhésive à base de polyuréthane est située entre une membrane flexible (FSB) et une membrane rigide (RSB) pour former la structure multicouche.

Selon un mode préféré l'utilisation comprend l'application de la composition adhésive, après extrusion, de façon manuelle ou automatique entre au moins une bande d'une membrane rigide et au moins une bande d'une membrane souple avec une épaisseur comprise entre 0,2 et 5 mm, dans des conditions climatiques de températures T et humidité relatives HR élevées, de préférence T supérieure à 25°C et HR supérieure à 55%, de préférence T comprise entre 28 et 40°C, et HR compris entre 60 et 85%.

Selon un mode préféré la structure multicouche représente la barrière secondaire d'étanchéité d'une cuve intégrée dans une structure porteuse, telle que la coque d'un navire destiné au transport par mer de gaz liquéfié.

Selon un autre objet, l'invention concerne une composition adhésive particulière obtenue par réaction entre une partie A appelée résine et une partie B appelée durcisseur,

La partie A étant représentée par le mélange comprenant les ingrédients:

a) de 20 à 60 % en poids de la partie A, de préférence 23 à 45 % d'au moins un polyol choisi parmi les polyol polyéthers (a1), les polyols polyesters (a2), les polyols insaturés (a3), les polyuréthannes thermoplastiques à terminaisons hydroxyles (a4), chacun des composants a1 à a4 ayant une masse moléculaire moyenne comprise entre 200 et 9000 g/mol et de fonctionnalité OH comprise entre 2 et 4,6 ; le polyol a) de la partie A comprenant au moins un pré polymère polyuréthanne thermoplastique à terminaisons OH (a4) choisis parmi les pré polymères polyuréthannes aliphatiques et aromatiques, et les mélanges de ces composés;

b) de 0,4 à 3 % en poids de la partie A, de préférence 0,5 à 1,5% d'au moins un agent de seuil choisi parmi le groupe des amines ou polyamines, primaires ou secondaires;

c) de 0 à 10% en poids de la partie A, de préférence 4 à 8% d'au moins un rallongeur de chaîne choisi parmi le groupe des diols de C2 à C10;

d) de 22 à 70% en poids de la partie A, de préférence 35 à 65% de charges inorganiques avec de préférence des charges inorganiques réparties entre le tamis moléculaire (2 à 15% en poids dans la partie A, de préférence 10 à 15%) et les charges minérales (20 à 65% en poids de la partie A, de préférence de 25 à 50%).

e) de 2 à 6 % en poids de la partie A, de préférence 3 à 4% d'au moins un additif choisi parmi le groupe des agents mouillants, des antimousses, des dispersants, des colorants, des agents épaississants, des agents fluidifiants ;

f) de 0 à 0,05% en poids de la partie A, de préférence 0,01 à 0,04% d'un catalyseur de réticulation à déclenchement thermique;

La partie B étant représentée par la composition comprenant les ingrédients:

g) de 75 à 100% en poids de la partie B, de préférence 85 à 90% d'au moins un pré polymère polyuréthanne à terminaisons NCO de masse moléculaire moyenne comprise entre 840 et 2100 g/mol et de fonctionnalité NCO comprise entre 2 et 4;

h) de 0 à 20% en poids de la partie B, de préférence 5 à 15% de charges inorganiques ;

i) de 0 à 5 % en poids de la partie B, de préférence 1 à 3% d'au moins un additif choisi parmi le groupe des agents épaississants, des agents fluidifiants;

et le rapport des fonctions NCO (meq/g) de la partie B sur la somme des fonctions réactives OH (meq/g) et NH (meq/g) de la partie A allant de 0,90 à 1,20 de préférence de 1,00 à 1,10.

La composition adhésive préférée est celle dans laquelle le pré polymère polyuréthane (a4) est obtenu par polyaddition d'au moins un polyol de type a1) à a3) et d'au moins un polyisocyanate dans des quantités telles que le rapport NCO / OH est compris entre 0,1 et 0,5.

La **Figure 1** représente l'assemblage mixte FSB/RSB dans le test de résistance au cisaillement.
La **Figure 2** représente la description de l'application manuelle.
La **Figure 3** représente la préparation d'éprouvettes H2.
La **Figure 4** représente la préparation du test d'étanchéité.
La **Figure 5** représente le schéma en coupe d'une partie de la cuve étanche.

***Exposé détaillé des modes de réalisation de l'invention***

Dans le domaine des applications cryogéniques et en particulier celui des méthaniers, les produits adhésifs utilisés qui permettent d'établir la liaison entre les barrières primaires et secondaires d'une cuve une fois en place, doivent satisfaire aux exigences du Code gaz international requises pour les méthaniers.

De ce fait on recherche pour ces adhésifs les propriétés de base suivantes:

- de bonnes propriétés d'adhésion (Peel et traction) sur FSB / RSB entre - 170°C et 40°C (Température du méthane liquide à pression atmosphérique : -163°C) ;
- de bonnes propriétés de mouillabilité afin de garantir les propriétés d'étanchéité;
- de bonnes propriétés de flexibilité pour supporter des contraintes à des températures allant jusqu'à -170°C;
- une consistance qui les rend pompables.

L'invention propose donc l'utilisation d'une composition adhésive polyuréthanne bi-composante (PU2K) ayant une résistance au cisaillement supérieure à 10 MPa mesurée selon la norme ISO 4587 dans toute la gamme de température allant de -170°C à +40°C et apte à assurer l'étanchéité vis-à-vis des gaz et des liquides en tant qu'élément d'adhésion entre deux substrats pour former une structure multicouche.

Ainsi, les compositions adhésives utilisées dans l'invention ont, à la base, les propriétés normalement exigées pour les adhésifs de liaison entre les barrières primaires et secondaires d'une cuve étanche de LNG à savoir adhésion, flexibilité, mouillabilité, pompabilité (par pompe à engrenage), stabilité au stockage.

En outre, les compositions adhésives utilisées dans l'invention ont aussi les propriétés suivantes:

- un collage structural sur supports difficiles (ex : INVAR, FSB, RSB...) entre -170°C et 40°C (Température du méthane liquide à pression atmosphérique: -163°C) ;
- une bonne flexibilité pour supporter les contraintes typiques d'application cryogénique ;
- une bonne applicabilité, c'est-à-dire avoir suffisamment de seuil pour éviter les phénomènes de coulures (application dans des positions verticales et au plafond) mais aussi avec une consistance adaptée à une dépose manuelle (réaliser facilement à la spatule des films uniformes allant jusqu'à plusieurs mm d'épaisseur).
- une faible sensibilité aux conditions climatiques ambiantes (ex : pas de moussage à 30°C, 70% HR) ;
- un temps ouvert long avec potentiellement une réactivité à chaud accrue pour satisfaire les exigences de productivité;
- l'absence de bulles de diamètre supérieur à 12 mm dans le joint de colle, après pelage des supports assemblés ;

Les compositions adhésives utilisées dans l'invention contiennent éventuellement un catalyseur à déclenchement thermique pour accélérer à chaud la réticulation et accroître la productivité.

Description de la composition

La composition utilisée dans l'invention est obtenue par réaction entre une partie A appelée résine et une partie B appelée durcisseur ;

La partie A est représentée par la composition comprenant les ingrédients suivants :

a) au moins un polyol choisi parmi les polyol polyéthers (a1), les polyols polyesters (a2), les polyols insaturés (a3), les polyuréthannes thermoplastiques à terminaisons hydroxyles (a4), chacun des composants a1 à a4 ayant une masse moléculaire moyenne comprise entre 200 et 9000 g/mol et une fonctionnalité OH comprise entre 2 et 4,6 ;

b) au moins un agent de seuil choisi parmi le groupe des amines ou polyamines, primaires ou secondaires ;

c) éventuellement un rallongeur de chaîne choisi parmi le groupe des diols de C2 à C10;

d) des charges inorganiques;

e) au moins un additif choisi parmi le groupe des agents mouillants, des antimousses, des dispersants, des colorants, des agents épaississants, des agents fluidifiants;

f) éventuellement un catalyseur de réticulation à déclenchement thermique;

La partie B est représentée par la composition comprenant les ingrédients suivants:

g) au moins un pré polymère polyuréthanne à terminaisons NCO de masse moléculaire moyenne comprise entre 840 et 2100 g/mol et de fonctionnalité NCO comprise entre 2 et 4 ;

h) des charges inorganiques ;

i) au moins un additif choisi parmi le groupe des agents épaississants, des agents fluidifiants.

**PARTIE A**

**a) les polyols.**

a1) Les polyols polyéthers sont généralement choisis parmi les polyols polyéthers aliphatiques et aromatiques, et les mélanges de ces composés. De préférence, leur masse moléculaire moyenne est comprise entre 200 et 9000 g/mol et leur fonctionnalité hydroxyle est comprise entre 2 et 4,6. A titre d'exemples de polyols polyéthers aliphatiques, on peut citer :

- les dérivés oxyalkylés de diols (ex. monoéthylene glycol, monopropylène glycol) tels que les polypropylène-glycols,
- les dérives oxyalkylés de triols (ex. glycérol, triméthylolpropane ou hexane-1,2,6-triol) tels que les copolymères d'oxyde d'éthylène et d'oxyde de propylène et les polymères d'oxyde d'éthylène, de propylène ou de butylène,
- les polytétraméthylène glycols,

A titre d'exemple de polyols polyéthers aromatiques, on peut citer les dérivés oxyalkylés de diphényles tels que les dérivés oxyéthylénés ou oxypropylénés du 4,4' du Bisphénol F et Bisphénol A.

De préférence, on utilise les dérivés oxypropylés de diols et de triols, et les polytétraméthylène glycols. On peut citer notamment les VORANOL® de chez DOW ou les TERATHANE® de chez INVISTA.

a2) Les polyols polyesters sont généralement choisis parmi les polyesters polyols aliphatiques et aromatiques, et les mélanges de ces composés. De préférence, leur masse moléculaire moyenne est comprise entre 250 et 7000 et leur fonctionnalité hydroxyle est comprise entre 2 et 4. A titre d'exemples, on peut citer :

- les polyesters polyols résultant de la condensation de polyols aliphatiques (linéaires ramifiés ou cycliques) ou aromatiques tels que l'éthanediol, le 1,2-propanediol, le 1,3-propanediol, le glycérol, le triméthylolpropane, le 1,6-hexanediol, le 1,2,6-hexanetriol, le butènediol, le sucrose, le glucose, le sorbitol, le pentaérythritol, le mannitol, la triéthanolamine, la N-méthyldiéthanolamine et les mélanges de ces composés avec un acide polycarboxylique ou son dérivé ester ou anhydride tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces acides, un anhydride insaturé tel que l'anhydride maléique ou phtalique, ou une lactone telle que la caprolactone ;
- les polyesters polyols d'origine naturelle tel que l'huile de ricin.

De préférence, on utilise les polyesters polyols résultant de la condensation de l'éthanediol, du 1,3-propanediol et/ou du 1,6-hexanediol avec l'acide adipique et/ou l'acide phtalique, les polycaprolactones et l'huile de ricin. On peut citer notamment les DYNACOL® de chez EVONIK, les CAPA® de chez SOLVAY et l'huile de ricin de chez NIDERA.

a3) Les polyols insaturés sont généralement choisis parmi les polyols et les mélanges de polyols ayant de préférence une masse moléculaire comprise entre 1200 et 3000. A titre d'exemples, on peut citer le polybutadiène et le polyisoprène à terminaisons hydroxylées (par exemple le PolyBD R45 HT d' Arkema).

Les polyols a1) à a3) précités peuvent également être utilisés en mélange avec d'autres composés hydroxylés tels que les pré polymères polyuréthannes thermoplastiques à terminaison OH (a4) à la place des polyols classiques précités.

a4) Les pré polymères polyuréthannes thermoplastiques à terminaisons OH sont généralement choisis parmi les pré polymères polyuréthannes aliphatiques et aromatiques, et les mélanges de ces composés. De préférence, leur masse moléculaire moyenne est comprise entre 250 et 7000 et leur fonctionnalité hydroxyle est comprise entre 2 et 4.

Le pré polymère polyuréthane (a4) est obtenu par polyaddition d'au moins un polyol de type a1) à a3) et d'au moins un polyisocyanate (jj) dans des quantités telles que le rapport NCO / OH est compris entre 0,1 et 0,5. La nature du pré polymère polyuréthanne influe sur la montée en cohésion. A cet égard, on préfère les pré polymères polyuréthannes à terminaisons OH obtenus par réaction d'un mélange de polyols polyesters (a2, a3) de fonctionnalité 2 à 3 et d'au moins un polyisocyanate aromatique de fonctionnalité 2 à 2,5.

A titre d'exemples, on peut citer les produits de polyaddition des polyols polyéthers (a1) et/ou polyols polyesters (a2 ou a3) précédemment cités avec un polyisocyanate (jj) généralement choisi parmi les polyisocyanates aliphatiques, cycloaliphatiques ou aromatiques bien connus de l'homme du métier, ainsi que les mélanges de ces composés.

jj) A titre d'exemples de polyisocyanates aliphatiques, on peut citer l'hexaméthylènediisocyanate (HMDI), l'éthylènedüsocyanate, l'éthylidènediisocyanate, le propylènediisocyanate, le butylènediisocyanate, le dichlorohexaméthylènediisocyanate, le furfurylènediisocyanate, les mélanges de ces composés et leurs oligomères.

A titre d'exemples de polyisocyanates cycloaliphatiques, on peut citer l'isophoronediisocyanate (IPDI), le cyclopentylène-1,3-diisocyanate, le cyclohexylène-1,4-diisocyanate, le cyclohexylène-1,2-diisocyanate, les mélanges de ces composés et leurs oligomères.

A titre d'exemples de polyisocyanates aromatiques, on peut citer le diphénylméthanediisocyanate, notamment le 4'4'-diphénylméthanediisocyanate (MDI), le 2,4'-diphénylméthanediisocyanate et le 2,2'-diphénylméthanediisocyanate, le toluènediisocyanate, notamment le 2,4-toluènediisocyanate (TDI) et le 2,6-toluènediisocyanate, le 2,2-diphénylpropane-4,4'-diisocyanate, le p-phénylènediisocyanate, le m-phénylènediisocyanate, le xylènediisocyanate, le 1,4-naphtalènediisocyanate, le 1,5-naphtylènediisocyanate, l'azobenzène-4,4'-diisocyanate, le diphénylsulfone-4,4'-diisocyanate, le 1-chlorobenzène-2,4-diisocyanat, les mélanges de ces composés et leurs oligomères.

De préférence, on utilise seuls ou en mélange, les diisocyanates, et plus particulièrement le MDI, le 2,4'-diphénylméthanediisocyanate, le 2,2'-diphénylméthanediisocyanate, le TDI, le 2,6-toluènediisocyanate, le HMDI, l'IPDI et leurs oligomères. On citera ici comme préféré l'ISONATE M 143 de Dow.

b) L'agent de seuil est choisi parmi le groupe des amines ou polyamines, primaires ou secondaires. Ces amines, en réagissant rapidement avec les isocyanates du durcisseur, produisent des polyurées. Les polyurées donnent lieu à des liaisons hydrogènes très fortes qui augmentent significativement la viscosité du mélange, réduisant ainsi la coulure.

Les amines sont choisies parmi l'éthylène diamine, la propylène diamine, tétraméthylène diamine, pentaméthylène diamine, hexaméthylene diamine, isophorone diamine, dicyclohexylmethane diamine, cyclohexane diamine, pipérazine, amino ethyl pipérazine, 2-methylpentamethylene diamine, 1, 12-dodecane diamine, bis-hexamethylene diamine, diméthylethylène diamine, diéthylethylene diamine, diméthyl propylène diamine, diethyl propylène diamine, pentaéthylene hexamine, diethylene triamine, hydrazine, xylylene diamine, m-phenylene diamine, p-phenylene diamine, 4,4'-methylene dianiline, 4,4'-diaminodiphenyl sulfone, piperazine, 2,6-diaminopyridine, 4,4'- methylene bis (orthochloroaniline), diethyltoluene diamine, des polyetheramines primaires ou secondaires de masse molaire compris entre 100-10000 g/mol et ayant une fonctionnalité comprise entre 2 et 3, comme notamment la famille des Jeffamine® de chez Huntsman.

Lorsque aucun agent de seuil n'est ajouté le mélange est trop coulant et la viscosité trop faible (26 Pa.s) pour une application correcte de la colle.

L'incorporation d'un agent de seuil appartenant à la famille des amines ou des polyamines dans la résine a un impact sur la viscosité initiale de la composition d'adhésif et sa capacité de coulure au moment de l'application sur le premier substrat. On utilise de préférence la pipérazine ou la JEFFAMINE® T 403 lesquelles permettent de diminuer voir éliminer les phénomènes de coulure. Il peut être nécessaire d'utiliser un solvant pour solubiliser l'agent de seuil b) en particulier la pipérazine. Ce solvant est choisi parmi les polyols polyether de fonctionnalité entre 2 et 3 de masse moléculaire moyenne entre 400 et 800 tel que le VORANOL® CP 450 de chez DOW.

c) Eventuellement on utilise un rallongeur de chaîne choisi de manière non limitative parmi le groupe des diols primaires et/ou secondaires linéaires, cycliques ou ramifiés, saturés ou insaturés de C2 à C10. Les diols sont choisis parmi l'éthanediol, le 1,2-propanediol, le 1,3-propanediol, le 1,2-butanediol, 1,4-butanediol, le 1,6-hexanediol, le 2-butène-1,4-diol, le 2-éthyl-1,3-hexanediol et le 2-methyl-1,3-propanediol et 1,6-cyclohexanediol.

d) Les charges inorganiques sont choisies parmi le groupe des charges minérales d1 tel que les carbonates de calcium, les talcs, les kaolins et le groupe d2 des tamis moléculaires de type zéolithes synthétiques. On peut citer notamment la CRAIE 200 TB de chez OMYA, la SOCAL® 312 de chez SOLVAY et la UOP® L POWDER de chez UOP. Ces charges sont avantageusement inférieures à 200 microns, de préférence inférieures à 100 microns pour donner au mélange de la partie A la propriété d'être pompable (pompe à engrenage).

e) autres additifs.

La partie A peut en outre comprendre, selon l'invention, des additifs e) (fonctionnels) tels qu'un additif mouillant et/ou dispersant tel qu'un alcool gras ethoxylé ou un sel d'acide carboxylique de polyamidoamine (ANTI-TERRA® 204 de chez BYK), un ou des agent(s) antimousse(s) à base d'une solution non aqueuse d'un polysiloxane (BYK® 080 de chez BYK), des pigments ou des colorants organiques et/ou inorganiques comme le noir de fumée ou le bleu Carburex, des modificateurs rhéologiques sous forme pulvérulente de type silice pyrogénée (AEROSIL® R 202 de chez EVONIK DEGUSSA) ou cires (THIXATROL® ST de chez RHEOX/ ELEMENTIS ou Crayvallac® Antisettle CVP de chez Cray-Valley), des plastifiants de type Mono et bis(xylyl)xylène (JARYSOL® XX de chez Arkema). De façon avantageuse, l'utilisation de charges et d'additifs traités hydrophobes aide à réduire la sensibilité des colles aux conditions climatiques extrêmes et donc au moussage. L'incorporation d'une plus forte concentration en tamis moléculaire (10 à 15% en poids de la partie A) permet de piéger l'eau avant qu'elle ne réagisse avec les isocyanates et d'éliminer le moussage.

f) Un catalyseur de réticulation à déclenchement thermique de préférence une amine tertiaire bloquée peut éventuellement être présent dans la partie A. L'incorporation d'un catalyseur permet de maintenir un temps ouvert long à l'ambiante tout en accélérant très fortement la réticulation à chaud, et accroître ainsi la productivité. On peut citer notamment comme catalyseur préféré le 1,8-diazabicyclo[5.4.0]undec-7-ene ou DBU de chez AIR PRODUCTS.

**PARTIE B.**

g) Les pré polymères polyuréthannes g) à terminaisons NCO sont généralement choisis parmi les pré polymères polyuréthannes aliphatiques et aromatiques, et les mélanges de ces composés. De préférence, leur masse moléculaire moyenne est comprise entre 840 et 2100, leur fonctionnalité NCO étant comprise entre 2 et 4, avec des teneurs en NCO comprises entre 8 et 20 % en poids et de préférence entre 11 et 17 %.

Le pré polymère polyuréthanne g) à terminaisons NCO est obtenu par polyaddition d'au moins un polyol choisi parmi les polyols a1) à a3) cités ci-dessus dans la partie A et d'au moins un polyisocyanate (jj) cité ci-dessus dans la partie A dans des quantités telles que le rapport NCO / OH est compris entre 3 et 5.

La nature du pré polymère polyuréthanne g) influe sur la réactivité de A + B.

A cet égard, on préfère les pré polymères polyuréthannes à terminaisons NCO obtenus par réaction d'un mélange de polyols polyéthers (a1) de fonctionnalité 2 à 3 et d'au moins un polyisocyanate (jj) aromatique de fonctionnalité 2 à 2,5.

h) Les charges inorganiques h) sont choisies parmi le groupe des charges minérales telles que les carbonates de calcium, les talcs, les kaolins et le groupe des tamis moléculaires de type zéolithes synthétiques. On peut citer notamment la CRAIE 200 TB de chez OMYA, la SOCAL® 312 de chez SOLVAY et la UOP® L POWDER de chez UOP. Ces charges sont avantageusement inférieures à 200 microns, de préférence inférieures à 100 microns pour donner au mélange de la partie B la propriété d'être pompable (pompe à engrenage).

i) autres additifs.

La partie B peut en outre comprendre des additifs i) tels que des pigments ou colorants organiques et/ou inorganiques, des modificateurs rhéologiques sous forme pulvérulente de préférence de type silice pyrogénée (AEROSIL® R 202 de chez EVONIK DEGUSSA).

Répartition quantitative des ingrédients dans la composition.

Selon un mode de réalisation préféré d'utilisation de la composition adhésive cryogénique:

a) le polyol représente de 20 à 60 % en poids de la partie A, de préférence 23 - 45%;

b) l'agent de seuil représente de 0,4 à 3 % en poids de la partie A, de préférence 0,5 à 1,5%;

c) le rallongeur de chaîne représente de 0 à 10% en poids de la partie A, de préférence 4 à 8% ;

d) les charges inorganiques représentent de 22 à 70% en poids de la partie A, de préférence 35 à 65% ; les charges inorganiques sont réparties entre 2 à 15% en poids de la partie A, de préférence 10 à 15% de tamis moléculaire, et de 20 à 65% en poids de la partie A, de préférence de 25 à 50% de charges minérales.

e) les additifs représentent de 2 à 6% en poids de la partie A, de préférence 3 à 4%;

f) le catalyseur représente de 0 à 0,05% en poids de la partie B, de préférence 0,01 à 0,04%;

g) le Pré polymère NCO représente de 75 à 100% en poids de la partie B, de préférence 85 à 90%;

h) les charges inorganiques représentent de 0 à 20% en poids de la partie B, de préférence 5 à 15%;

i) les additifs représentent de 0 à 5 % en poids de la partie B, de préférence 1 à 3%;

et le rapport des fonctions NCO (meq/g) de la partie B sur la somme des fonctions réactives OH (meq/g) et NH (meq/g) de la partie A allant de 0,90 à 1,20 de préférence de 1,00 à 1,10.

Selon un autre objet l'invention concerne une composition adhésive particulière que répond à l'ensemble des propriétés ciblées définies plus haut et qui est obtenue par réaction entre une partie A appelée résine et une partie B appelée durcisseur,

La partie A étant représentée par le mélange comprenant les ingrédients :

a) de 20 à 60 % en poids de la partie A, de préférence 23 à 45 % d'au moins un polyol choisi parmi les polyol polyéthers (a1), les polyols polyesters (a2), les polyols insaturés (a3), les polyuréthannes thermoplastiques à terminaisons hydroxyles (a4), chacun des composants a1 à a4 ayant une masse moléculaire moyenne comprise entre 200 et 9000 g/mol et de fonctionnalité OH comprise entre 2 et 4,6 ; le polyol a) de la partie A comprenant au moins un pré polymère polyuréthanne thermoplastique à terminaisons OH (a4) choisis parmi les pré polymères polyuréthannes aliphatiques et aromatiques, et les mélanges de ces composés ;

b) de 0,4 à 3 % en poids de la partie A, de préférence 0,5 à 1,5% d'au moins un agent de seuil choisi parmi le groupe des amines ou polyamines, primaires ou secondaires ;

c) de 0 à 10% en poids de la partie A, de préférence 4 à 8% d'au moins un rallongeur de chaîne choisi parmi le groupe des diols de C2 à C10 ;

d) de 22 à 70% en poids de la partie A, de préférence 35 à 65% de charges inorganiques ; les charges inorganiques sont réparties entre le tamis moléculaire (2 à 15% en poids dans la partie A, de préférence 10 à 15%) et les charges minérales (20 à 65% en poids de la partie A, de préférence de 25 à 50%).

e) de 2 à 6 % en poids de la partie A, de préférence 3 à 4% d'au moins un additif choisi parmi le groupe des agents mouillants, des antimousses, des dispersants, des colorants, des agents épaississants, des agents fluidifiants ;

f) de 0 à 0,05% en poids de la partie B, de préférence 0,01 à 0,04% d'un catalyseur de réticulation à déclenchement thermique ;

La partie B étant représentée par la composition comprenant les ingrédients:

g) de 75 à 100% en poids de la partie B, de préférence 85 à 90% d'au moins un pré polymère polyuréthanne à terminaisons NCO de masse moléculaire moyenne comprise entre 840 et 2100 g/mol et de fonctionnalité NCO comprise entre 2 et 4 ;

h) de 0 à 20% en poids de la partie B, de préférence 5 à 15% de charges inorganiques ;

i) de 0 à 5 % en poids de la partie B, de préférence 1 à 3% d'au moins un additif choisi parmi le groupe des agents épaississants, des agents fluidifiants ;

et le rapport des fonctions NCO (meq/g) de la partie B sur la somme des fonctions réactives OH (meq/g) et NH (meq/g) de la partie A allant de 0,90 à 1,20 de préférence de 1,00 à 1,10.

De préférence dans cette composition adhésive, le pré-polymère polyuréthane (a4) est obtenu par polyaddition d'au moins un polyol de type a1) à a3) et d'au moins un polyisocyanate dans des quantités telles que le rapport NCO / OH est compris entre 0,1 et 0,5.

Procédé de préparation des compositions adhésives.

Chaque partie A ou B est préparée séparément. La partie A est préparée par mélange des différents ingrédients a) à f) sous vide pour dégazer le milieu entre 23°C et 70°C.

La partie B est préparée dans une première étape par réaction sous vide à une température comprise entre 70°C et 110°C entre un polyol a) et un polyisocyanate (jj) jusqu'à obtention du % de NCO visé (de 8% à 20%) dans le pre-polymère isocyanate g). Puis dans une deuxième étape après refroidissement à environ 20°C, on mélange le prépolymère g) avec les autres ingrédients h) à i).

La résine et le durcisseur associé sont conditionnés dans une bicartouche. La distribution de la colle se fait à l'aide d'un pistolet pour bicartouche. Un mélange homogène des deux composants est obtenu en fixant à la bicartouche un mélangeur statique.

La composition adhésive est obtenue selon un procédé connu de l'homme du métier par réaction de la partie A avec la partie B dans un rapport NCO / OH + NH allant de environ 0,90 à 1,20, de préférence entre 1, 00 et 1,10 de manière à ce que le rapport en volume des parties A et B soit préférentiellement proche de 1. Le rapport NCO / OH + NH est défini comme étant le rapport des fonctions NCO (méq/g) du durcisseur B sur la somme des fonctions réactives OH (méq/g) et NH (méq/g) de la résine A.

La réactivité de A avec B peut être facilement contrôlée par l'ajout de catalyseur f) dans la partie A et/ou par la nature des polyisocyanates jj) utilisés dans la partie B. On observe notamment que les réactivités sont plus faibles en présence de LUPRANAT® MIPI (exemples C5 à C9) par rapport à la présence d'ISONATE® M143 seul (exemples C1 à C4) du fait de la présence de l'isomère 2,2'.

Caractéristiques de la composition d'adhésif.

Les résines A ou durcisseurs B sont caractérisés par :

- leur couleur : observation visuelle ;
- leur densité: mesurée avec un pycnomètre de 50 ml sur des produits à 23°C ;
- leur viscosité : mesurée avec à un viscosimètre Brookfield RVT (Norme ISO 2555), aiguille 7, vitesse de rotation de 20 tr/min, sur les produits à 23°C ;

- leur tendance à sédimenter (produits chargés) caractérisée par le % de sérum.

Un flacon contenant 500 ml de résine ou de durcisseur est stocké dans une étuve à 40°C durant un mois. Le % de sérum correspond à la quantité de surnageant relevé après 1 mois de stockage à 40°C normalisé par la quantité totale de produit initialement introduite.

La viscosité de la résine et du durcisseur (entre 20 et 100 Pa.s), leur faible densité (entre 1,0 à 1,7) ainsi que la taille des charges utilisées (inférieure à 200 $\mu$m et de préférence inférieure à 100 $\mu$m) font de toutes ces résines ou durcisseurs des produits parfaitement pompables par pompe à engrenage.

Les produits ont de plus une excellente stabilité puisque après un stockage prolongé à 40°C aucune sédimentation significative n'est observée (% sérum < 1 % et uniquement dans le cas des résines qui contrairement aux durcisseurs sont chargées). Cette caractéristique les rend utilisables avec des machines de dosage.

La sédimentation est maîtrisée en jouant sur la taille des charges telle que la MIKHART® C (max 50 $\mu$m) et/ou en incorporant des agents épaississant tels que le Thixatrol® ST ou l'Aerosil® R202.

Propriétés structurales des compositions adhésives.

Résistance au cisaillement.

Les compositions adhésives à base de polyuréthanne bi-composantes assurent un collage structural (rupture cohésive) dans une large gamme de température allant de - 170°C à 40°C. Elles se distinguent des adhésifs polyuréthanne non structuraux susceptibles d'être utilisé dans d'autres endroits où il n'est pas nécessaire d'assurer une bonne tenue cryogénique.

Plus particulièrement, les compositions adhésives ont une résistance au cisaillement supérieure à 10 MPa mesurée selon la norme ISO 4587 pour des épaisseurs de 0.2 à 4.0 mm sur toute la gamme de température allant de -170°C à 40°C.

a) On mesure la résistance en traction cisaillement à 23°C de l'adhésif déposé entre deux supports métalliques en inox INVAR/INVAR.

*Méthode.*

Les éprouvettes INVAR (dimensions : 25 mm de largeur x 100 mm de longueur x 1.5 mm d'épaisseur) sont poncées dans le sens de la largeur au papier abrasif P40 (Rugosité 10-15 microns), dégraissées à l'heptane et séchées 10 min.

L'adhésif préalablement conditionné à 23°C dans une bicartouche est déposé sur une des extrémités dépolies d'une des éprouvettes INVAR sur une surface de 25 x 12,5 mm$^2$, épaisseur : 0.8 mm (réglage avec les cales d'épaisseur). On pose ensuite l'autre éprouvette dans l'axe de la première sur la face dépolie et on presse fortement l'assemblage (pour 6 éprouvettes : poids gueuses > 4.5 Kg).

L'ensemble est maintenu 2 heures en étuve ventilée régulée à 60 °C. On maintient ensuite l'assemblage sous pression durant 24 heures mini à 23 °C.

L'essai de traction est effectué après 7 jours de réticulation à 23°C à l'aide d'un dynamomètre (INSTRON model 1185) à 10 mm/min. Un dispositif de maintien est adapté sur les mors de l'appareil afin d'éviter tout flambage des éprouvettes.

On mesure la force à la rupture. La résistance en cisaillement à 23°C est calculée en normalisant cette force par la surface réelle de joint de colle.

Toutes les compositions exemplifiées présentent une résistance en traction cisaillement sur INVAR/INVAR supérieure à 10 MPa, caractéristique d'assemblages structuraux.

b) On mesure la résistance au cisaillement de l'adhésif déposé entre deux supports FSB/RSB à - 170°C.

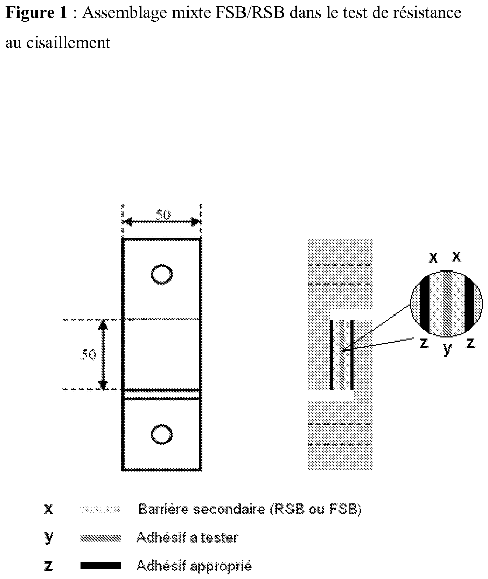

Le test de cisaillement est réalisé à -170°C et à une vitesse de traction de 1,3mm/min sur un assemblage mixte FSB / RSB tel que décrit dans le schéma de la **figure 1.** Le test de traction ne pouvant être réalisé directement sur un assemblage FSB / RSB à cause de la fragilité de ces supports, on réalise dans un premier temps le collage séparé des membranes (x) sur 2½ éprouvettes en aluminium sablé en forme de L au moyen d'un adhésif approprié (z) puis on réalise ensuite l'assemblage des ½ éprouvettes FSB et RSB ainsi réalisées au moyen de la composition adhésive (y) à tester, sur une surface de 50 mm x 50 mm et une épaisseur de joint de 0,8 mm.

L'éprouvette ainsi réalisée est installée dans l'enceinte climatique (thermo-régulée à -170°C) du dynamomètre et cisaillée à une vitesse de 1,3 mm/min jusqu'à rupture de l'assemblage.

On enregistre la force maximale atteinte en kiloNewton (kN) qui permet de calculer la valeur maximale de contrainte (en MPa).

Toutes les compositions exemplifiées présentent une résistance en traction cisaillement très élevée supérieure à 20 MPa à -170°C, caractéristique d'assemblages structuraux.

Description d'un mode particulier d'application manuelle de la colle.

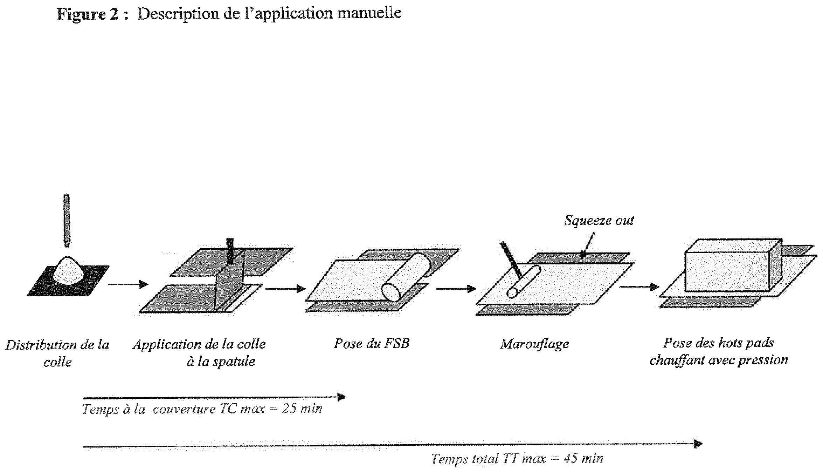

La **figure 2** décrit la méthode d'application manuelle de l'adhésif entre 2 membranes et illustre les notions de temps de couverture TC et temps total TT.

Une application manuelle se déroule de la façon suivante :

- La colle est préalablement extrudée sur une palette (Taloche).
- L'opérateur applique ensuite à la spatule une couche d'épaisseur allant de 0,2 à 5 mm, de préférence de 0,2 à 2 mm de la colle sur deux bandes de RSB distantes de 3 cm l'une de l'autre (Joint de réglage et de dilatation laissé entre les panneaux de mousse renforcées). Les bandes de RSB peuvent mesurer jusqu'à 3 m de longueur et être placées en position verticale, horizontale (sol, mur ou plafond) ou inclinée à 45°C (Chanfrein).
- L'opérateur vient ensuite dérouler la membrane souple FSB sur les deux bandes de RSB à assembler en prenant soin de laisser de chaque côté un débordement de colle. Cette partie visible d'adhésif est appelée « squeeze out » et permet d'effectuer des contrôles sur la colle (aspect (bullage, moussage, régularité...), dureté...)
- Le FSB est ensuite marouflé et un film anti-adhésif est déposé.
- Enfin, l'opérateur vient poser des « hot pads » chauffants à 60°C durant au moins deux heures en imposant une certaine pression (250 mBar).

L'utilisation des « hot pads » (60°C) sous pression, a une double vocation :

- Fluidifier dans un premier temps la colle et aider sa pénétration dans la FSB
- Accélérer la cinétique de réticulation par rapport à l'ambiante.

Le temps entre le début de l'extrusion de la colle sur la palette et la pose du FSB est appelé temps à la couverture (TC).

Le temps entre le début de l'extrusion de la colle sur la palette et la pose des hot pads sous pression est appelé temps total (TT).

Si l'augmentation de viscosité de la colle est trop importante au bout de TC, la mouillabilité sur le FSB et donc les propriétés d'adhésion mais surtout d'étanchéité de la barrière secondaire risquent de ne plus être assurées.

De même, si la viscosité de la colle est trop importante au bout de TT, la chute de viscosité induite par la pose des « hot pads » (60°C) sous pression pourrait ne plus être suffisante pour favoriser l'imprégnation du FSB et donc l'étanchéité.

De ce fait la composition adhésive utilisée dans l'invention permet l'assemblage de la barrière secondaire dans les conditions requises. La colle est appliquée avec un TC et un TT pouvant aller respectivement jusqu'à 40 min et 45 min, dans des conditions climatiques limites (ex : 30 °C, 70% HR).

Elle satisfait par ailleurs aux exigences du Code gaz international requises pour les méthaniers (adhésion, étanchéité, résistance au méthane liquide, à l'eau de mer).

Applicabilité du mélange

Pour juger de la bonne applicabilité de la colle, notamment en dépose manuelle, on mesure :

- La viscosité initiale du mélange afin de savoir si la colle pourra être spatulée facilement. Cette viscosité est mesurée avec un viscosimètre Brookfield RVT (Norme ISO 2555, Aiguille 7, 20 tr/min) sur 100 ml d'adhésif, préalablement conditionné à 23°C et venant d'être extrudé dans un bécher. La viscosité initiale du mélange correspond à la viscosité lue la plus faible. Pour satisfaire aux contraintes d'application, la composition adhésive présente une viscosité initiale mesurée, comprise entre 27 et 120 Pa.s, de préférence comprise entre 45 et 110 Pa.s, ou encore de préférence comprise entre 65 et 100 Pa.s.
- La tendance à la coulure de la composition adhésive est déterminée de la façon suivante : un cordon de 1 à 2 cm de colle préalablement conditionnée à 23°C est extrudé sur un carton placé verticalement. On regarde si le cordon garde sa forme initiale ou non.

Dans ces conditions, l'absence de coulure permet une dépose manuelle de celle-ci mais aussi son utilisation à l'aide d'un équipement robotisé.

## Durée de vie (DVP)

On mesure la durée de vie en pot (DVP en minutes) du mélange A+B dans un rapport d'emploi 1/1 en volume à 23°C. Cette mesure donne une indication sur la réactivité du mélange à 23°C.

Pour cela, on mélange dans un pot 50 ml de partie résine A et 50 ml de la partie durcisseur B de la formulation afin de déterminer le temps au-delà duquel le mélange est pris en masse. Cette prise en masse est caractérisée par l'absence de trace de colle sur un abaisse-langue amené au contact intime du mélange.

La DVP des compositions est supérieure à 40 minutes et va jusqu'à 140 minutes.

## Propriétés mécaniques intrinsèques

On évalue la flexibilité de la colle selon la méthode suivante :

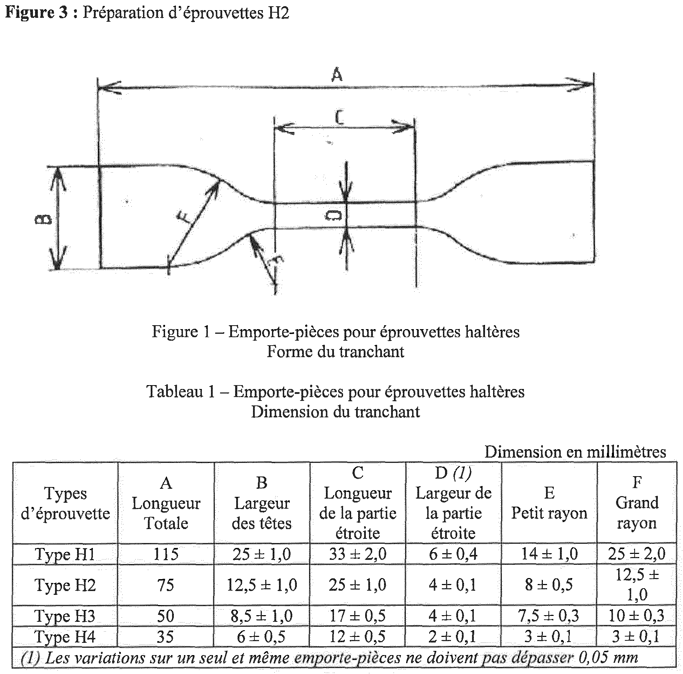

On prépare des éprouvettes H2 (voir **figure 3**) pour dimension de l'emporte pièce), d'épaisseur environ 3 mm par injection de la colle dans un moule en téflon (**figure 3** pour dimension des éprouvettes). Le moule est placé 120 minutes en étuve ventilée régulée à 60°C. L'essai de traction est effectué après 7 jours de réticulation à 23°C à l'aide d'un dynamomètre (INSTRON model 1185) à 10 mm/min pour l'allongement et la résistance à la rupture et 1mm/min pour le module d'Young.

- L'allongement à la rupture (en %) est donné par l'extensomètre
- La résistance à la rupture (en MPa) correspond à la force mesurée à la rupture (en Newton) normalisée par la section de la partie étroite de l'éprouvette (en mm2) mesurée précisément avant la traction.
- Le module d'Young (en MPa) qui caractérise la rigidité du matériau est déterminé à partir de la tangente à l'origine de la courbe contrainte-déformation.

Toutes les compositions sont capables de se déformer de plus de 100 % à l'ambiante avant de se rompre à des contraintes importantes et supérieures à 15 MPa. Leurs modules d'Young, compris entre 100 et 200 MPa sont caractéristiques de produits relativement souples.

## Temps ouvert

Le temps ouvert TO d'une colle est défini comme le temps à ne pas dépasser avant l'assemblage des éléments. En dehors du TO, les propriétés recherchées ne sont plus assurées: l'adhésif n'est plus suffisamment fluide (réticulation trop avancée) pour assurer un bon mouillage du support à contrecoller.

Il est influencé par les conditions climatiques ambiantes d'application (humidité, température) mais dépend aussi par exemple de l'épaisseur du joint de colle et des supports à assembler.

En général, il est mesuré en assemblant deux éléments à différents temps et en regardant à partir de quel moment une perte significative des propriétés d'adhésion est observée.

Des collages ont ainsi été réalisés sur INVAR/INVAR suivant la méthode décrite ci dessus en assemblant les éprouvettes d'INVAR après différents temps d'attente à 23°C, 50 % HR. On note le temps à partir duquel la valeur de résistance en cisaillement a perdu 20 % de sa valeur initiale (temps d'attente avant assemblage nul).

En fonction de la réactivité nécessaire au mode d'application utilisé, les compositions adhésives permettent d'obtenir une large plage de TO allant jusqu'à 150 minutes. Le temps ouvert est ici principalement contrôlé par la nature des polyols et ou des polyisocyanates utilisés (ex : MIPI plus lent que Isonate® M143 en raison de la présence de l'isomère 2,2' du MDI) ainsi que par l'incorporation de catalyseur.

Un temps ouvert compris entre 90 et 150 minutes permet d'utiliser la composition en application manuelle.

L'incorporation d'un catalyseur à déclenchement thermique, de type amine tertiaire bloquée permet de maintenir un TO long à l'ambiante tout en accélérant très fortement la réticulation à chaud, et d'accroître ainsi la productivité.

La méthode utilisée pour rendre compte de la réactivité à chaud des colles est la mesure de la dureté shore A après une cuisson de 2 h à 60°C.

La colle est extrudée dans une coupelle (48 mm de diamètre, épaisseur de joint environ 9 mm). Puis la coupelle de colle est ensuite placée 2 h dans une étuve ventilée à 60°C puis est stocké à 23°C. La mesure de la dureté shore A est effectuée après différents temps à 23°C (1h, 1j et 7j) avec un duromètre Type Shore A - Equipement Zwick ASTM D 2240 A; DIN 53505; ISO 868. La dureté correspond à la valeur lue 15 secondes après la pénétration de la pointe du duromètre dans la colle (3 mesures sont systématiquement effectuées).

Sensibilité aux conditions climatiques : phénomènes de moussage.

Par nature, les polyuréthanes sont sensibles à l'humidité (les isocyanates réagissent avec l'humidité de l'air en produisant un dégagement gazeux de $CO_2$).

Le moussage correspond à la présence d'une multitude de bulles, dont la taille est inférieure au micron, réparties régulièrement dans la structure de l'adhésif.

Dans des conditions climatiques tropicales (30°C, 70% HR), un risque important de moussage peut d'ailleurs exister. Dans le cas de bi-composants, la réaction avec l'humidité est en général très largement minoritaire, la réaction la plus favorable étant celle entre les polyisocyanates et les polyols (ou amines). Elle peut néanmoins devenir non négligeable lorsque la quantité d'eau dans l'air est importante (température et humidité relative élevées) et que les temps d'expositions de la colle dans ces conditions sont longs (par exemple si TC temps de couverture et TT temps total sont longs).

La présence de moussage dans le joint de colle peut être particulièrement critique et néfaste car elle peut non seulement fragiliser le joint de colle mais aussi nuire à l'étanchéité de la barrière secondaire (source potentielle de fuite).

La sensibilité des compositions aux conditions climatiques est déterminée par la présence ou non de moussage après réticulation à chaud dans le « squeeze out » (voir **figure 3**) (application manuelle de la colle dans les conditions les plus discriminantes à 30°C, 70% HR, TC = 25 min, TT = 45 min). Dans des conditions climatiques classiques (27°C, 55% HR) aucune des compositions ne présente de moussage.

L'utilisation d'additifs hydrophobes comme l'huile de ricin ou des charges enrobées hydrophobées (exemple enrobage acide gras) aide à réduire la sensibilité des colles aux conditions climatiques extrêmes et donc au moussage. L'incorporation d'une plus forte concentration en tamis moléculaire (10 à 15% dans la partie A) permet de piéger l'eau avant qu'elle ne réagisse avec les polyisocyanates et d'éliminer le moussage.

Etanchéité

Le test mis en place pour évaluer l'étanchéité des assemblages est le test de NPA (Normal Porosity Area). Il est réalisé dans les conditions d'application limites et les plus défavorables (TC = 25 min, TT = 45 min à 30°C, 70% HR) et après réticulation à chaud de la colle.

Une étanchéité satisfaisante est garantie par une valeur de NPA inférieure à 0.085 cm$^2$.

Le test d'étanchéité est réalisé selon la procédure décrite ci-dessous :

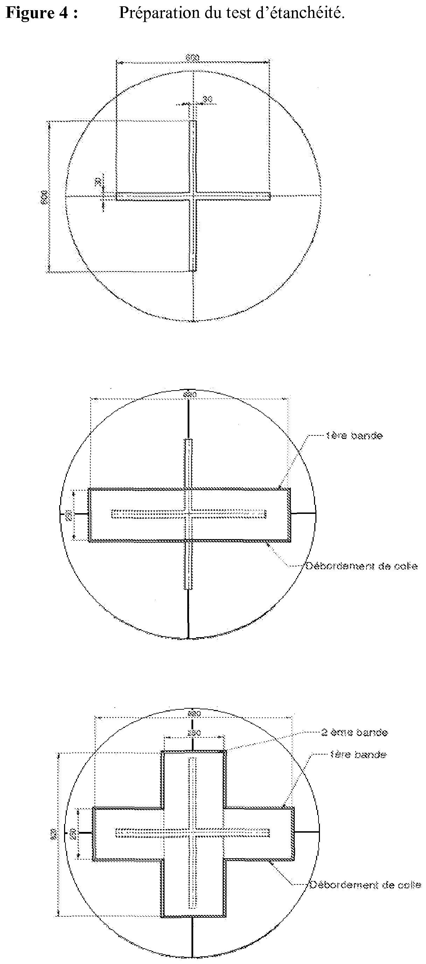

On évide un disque de RSB d'environ 1 m de diamètre à l'aide d'un gabarit pour réaliser au centre du disque deux fentes perpendiculaires de largeur 30 mm en forme de croix tel que décrit dans le 1er schéma de la **figure 4**

En respectant un « squeeze out » régulier d'environ 5 mm (débordement de l'adhésif), on colle la 1ère bande de FSB 25 minutes (820 mm x 250 mm) après le début de la dépose de l'adhésif (temps de couverture ou « covering time ») tel que décrit dans le 2nd schéma de la **figure 4,** puis on met en place le « Hot-pad » et l'air-bag pour mise sous contrainte uniforme (250 à 300 mbar) et mise en chauffe pour 2 heures à 60°C, 45 minutes après la dépose de l'adhésif (temps d'ouverture ou « open time »),

Après libération de l'assemblage du «Hot-pad» et de l'air-bag et refroidissement à température ambiante, on renouvelle la même opération avec la 2ème bande de FSB tel que décrit dans le 3ème schéma de la **figure 4.**

On place le disque dont la croix est encollée sur un support plan, face FSB vers le bas.

On scelle sur le disque de manière étanche sur la face RSB un couvercle de 1m de diamètre muni d'une vanne et d'un indicateur de pression et température au dessus de la croix sur la face FSB.

On fait subir à la face FSB un premier choc thermique en présence de N2 liquide puis retour à température ambiante.

On fait le vide sous le couvercle jusqu'à -530mbars puis on relève la remontée en pression à l'intérieur du cylindre. Le temps nécessaire pour passer de - 450 mbar à - 300 mbar (heures) permet le calcul de la section équivalente de fuite (NPA) réalisée après chaque choc thermique. L'expérience est renouvelée 7 fois par période de 24 heures. On détermine un taux de fuite moyen exprimé en cm$^2$ selon la formule suivante :

$$NPA = (1.21 \text{ x } 10^{-3} \text{ x } V_{uv}) / (A_{ab} \text{ x } 10^{-4} \text{ x } \Delta t)$$

NPA = Section équivalente de fuite ou « Normal Porosity Area » (cm$^2$).
$V_{uv}$ = Volume sous vide ou « Volume under vacuum » (m$^3$) soit 0,0785 m$^3$
$A_{ab}$ = Surface de la Barrière Secondaire (m$^2$) soit 0,3475 m$^2$

13

Δt = Temps nécessaire pour passer de - 450 mbar à - 300 mbar (heures).

Absence de bulles dans le joint de colle.

Une autre exigence à satisfaire pour cette application est l'absence de bulles de diamètre supérieur à 12 mm dans le joint de colle et ce, quelque soit les temps TC ou TT et les conditions ambiantes d'application. La présence de bulle étant d'autant plus probable que les TC et TT sont courts, les tests sont réalisés à TC = 10 minutes et TT = 15 minutes. L'aspect global du joint de colle est vérifié en pelant le FSB.

On note que lorsque l'on incorpore un pré polymère polyuréthanne à terminaison OH (a4) à la place de polyols classiques dans la résine A pour obtenir des chaînes plus longues et/ou plus ramifiées, ceci a pour effet d'augmenter le taux de réticulation initiale et de diminuer la présence de bulles.

Application des compositions adhésives à la construction de barrière d'étanchéité secondaire.

Les cuves étanches et thermiquement isolantes comprenant au niveau de la barrière d'étanchéité secondaire la composition adhesive cryogénique en tant que couche de liaison entre la membrane rigide et la membrane flexible sont des cuves intégrées dans une structure porteuse, telle que la coque d'un navire destiné au transport par mer de gaz liquéfié. Pour la fabrication et la description plus générale de ces cuves intégrées, on pourra se référer à l'enseignement fourni par les brevets FR 28822814, FR 2887010, FR 2781557 de la société Gaz Transport et Technigaz (GTT).

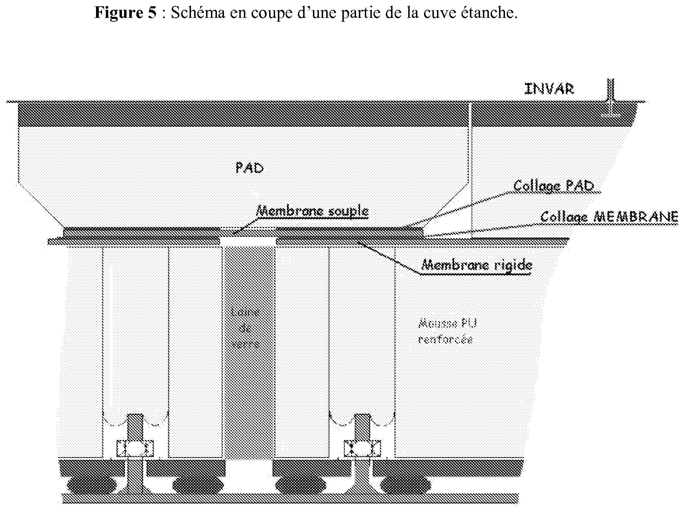

La **figure 5** représente un schéma en coupe d'une partie de la cuve étanche, telle que la coque d'un navire destiné au transport par mer de gaz liquéfié, avec la zone de *Collage membranes* concernée par le collage de la membrane avec la colle adhésive selon l'invention.

Cette zone de *Collage membrane* est située entre la membrane rigide solidaire des panneaux de mousse de PU renforcée et représentant un élément constitutif de la barrière secondaire et la membrane souple servant à assembler deux éléments de barrière secondaire. Au dessus de la membrane souple se situe le panneau isolant (TBP = Top Bridge Pad) lui même solidaire de la membrane primaire en INVAR ou Inox, en contact avec le gaz liquéfié.

Bien entendu, la présente invention n'est pas limitée aux exemples et au mode de réalisation décrits et représentés, mais elle est susceptible de nombreuses variantes accessibles à l'homme de l'art.

**Exemples.**

Synthèse des parties A (compositions notées R dans le tableau I).

**Exemple R1**

Dans un réacteur en verre, sont introduits 71.5g d'Ethyl 2 hexane Diol 1.3, 111g de Terathane 650, 119.3g de Capa 3050, 2.7g de Byk 080A, 5.3g d'Antiterra 204 et 0.44g de noir de fumée 101 poudre préalablement empâté dans 1.76g de polyBD R45HT. Le mélange est mis sous vide et maintenu sous constante agitation durant 10min. Ensuite, les différents tamis et charges sont incorporés dans l'ordre suivant :

- 29.7g de siliporite SA 1720
- 462.3g de craie BL200TB
- 135.2g de craie socal 312

Entre chaque élément incorporé, le mélange est maintenu 15 min sous agitation et sous vide. Après s'être assuré que l'ensemble des tamis et charges sont parfaitement dispersés, 13.5g de Jeffamine T403 et 4.7g d'unithox préalablement dissout à chaud dans 42.6g de Jarysol XX sont introduits. Le mélange est pour finir agité 1 heure sous vide.

Le mélange R1 est de couleur grise, de viscosité Brookfield (23°C, A7 20T) de 53 Pa.s et de densité 1.63.

Les mélanges R2 à R4 sont préparés de façon identiques au mode opératoire de R1 en utilisant les ingrédients indiqués dans le tableau I.

**Exemple R5**

Dans un réacteur en verre, sont introduits 120.2g de CAPA 3050, 146.8g d'Huile de Ricin et 15g de Thixatrol ST. Le mélange est maintenu sous constante agitation à 80 °C sous vide pendant 60 min afin de développer le caractère épaississant du Thixatrol. Le mélange est refroidit jusqu'à température ambiante (environ 25°C) et sont alors introduits 245g de UOP L Pate et 10g de BYK 080. Ensuite, 430g de Mikhart C sont incorporés et le mélange est maintenu 20 min sous agitation et sous vide. Après s'être assuré que les charges sont parfaitement dispersées, on ajoute successivement 0.5g de Bleu Carburex G préalablement dissout dans 20g de Jarysol XX, 72g d'Ethyl 2 hexane 1.3 Diol ainsi que 6g de pipérazine préalablement dissoute à chaud dans 11.2g de Voranol CP450. Le mélange est pour finir agité 1 heure sous vide.

Le mélange R5 est de couleur bleue, de viscosité Brookfield (23°C, A7 20T) de 35.8 Pa.s et de densité de 1.42.

Les mélanges R6 à R7 sont préparés de façon identiques au mode opératoire de R5 en utilisant les ingrédients indiqués dans le tableau I.

**Exemple R9**

Dans un réacteur en verre, sont introduits 120.2g de CAPA 3050, 146.8g d'Huile de Ricin et 30g d'Isonate M143. Le mélange est maintenu sous constante agitation à 80 °C sous vide pendant 90min afin de consommer toutes les fonctions NCO. Le prépolymère polyurethane à terminaisons hydroxyles ainsi synthétisé a un IOH théorique de 167. Le prépolymère est refroidit jusqu'à température ambiante (environ 25°C) Dans ce mélange sont alors introduits 245g de UOP L Pate et 10g de BYK 080.

Ensuite, la silice et la charge sont incorporées dans l'ordre suivant :

- 8g d'Aerosil R202
- 430g de Mikhart C

Entre chaque élément incorporé, le mélange est maintenu 20 min sous agitation et sous vide. Après s'être assuré que l'ensemble des charges sont parfaitement dispersé, on ajoute successivement 0.5g de Bleu Carburex G préalablement dissout dans 20g de Jarysol XX, 72g d'Ethyl 2 hexane 1.3 Diol, 8.5g de pipérazine préalablement dissoute à chaud dans 8.5g de Voranol CP450 ainsi que 0.3g de catalyseur Polycat SA 1/10. Le mélange est pour finir agité 1 heure sous vide.

Le mélange R9 est de couleur bleue, de viscosité Brookfield (23°C, A7 20T) de 30 Pa.s et de densité de 1.42.

Synthèse des parties B (compositions notées D dans le tableau II).

**Exemple D1**

Dans un réacteur en verre, sont introduits 597.6g d'Isonate M143 et 291g de Theratane 650. Le mélange est maintenu sous constante agitation à 80°C sous vide pendant 1 heure afin de consommer toutes les fonctions OH. Le prépolymère polyurethane ainsi synthétisé a un %NCO de 15.4%. Le prépolymère est refroidit jusqu'à température ambiante (environ 25°C). Ensuite, le tamis et la silice pyrogénée sont incorporés dans l'ordre suivant :

- 88.9g de siliporite SA 1720
- 22.5g d'Aerosil

Entre chaque élément incorporé, le mélange est maintenu 15 min sous agitation et sous vide. Le mélange est pour finir agité 1 heure sous vide.

La Synthèse D1 est de couleur beige, de viscosité Brookfield (23°C, A7 20T) de 38 Pa.s et de densité 1.18.

Les mélanges D2 à D7 sont préparés de façon identiques au mode opératoire de D1 en utilisant les ingrédients indiqués dans le tableau II.

**Exemple D9**

Dans un réacteur en verre, sont introduits 265.6g d'Isonate M143, 265.6g de Lupranat MIPI et 357.4g de Theratane 650. Le mélange est maintenu sous constante agitation à 80°C sous vide pendant 1 heure afin de consommer toutes les fonctions OH. Le prépolymère polyurethane ainsi synthétisé a un %NCO de 13.5%. Le prépolymère est refroidit jusqu'à température ambiante (environ 25°C). Ensuite, le tamis et la silice pyrogénée sont incorporés dans l'ordre suivant :

- 88.9g de siliporite SA 1720
- 14g d'Aerosil

Entre chaque élément incorporé, le mélange est maintenu 15 min sous agitation et sous vide. Le mélange est pour finir agité 1 heure sous vide.

Le mélange D9 est de couleur beige, de viscosité Brookfield (23°C, A7 20T) de 26 Pa.s et de densité 1.18.

Synthèse des compositions A+ B (compositions notées C et T dans le tableau III) et évaluation des couples A/B).

La composition T7 est une composition de référence sans agent de seuil qui présente une très forte coulure et n'est pas compatible avec l'application recherchée.

La résine R1 et Le Durcisseur D1 sont utilisés en bicartouche dans un rapport en volume de 1 pour 1, ce qui correspond à un nombre de fonction NCO sur un nombre de fonction (OH +NH) de 1,1. Cette composition adhésive nommée C1 est adaptée aux applications aux temps ouverts courts.

La composition C2 est particulièrement sensible aux conditions climatiques extrêmes : alors qu'aucune anomalie n'est constaté à 27°C, 55% HR, un moussage très important (accompagné d'expansion de volume) apparaît à 30°C, 70% HR. Pour les autres compositions, le moussage est moindre voire inexistant.

De même, alors que la C2 a un temps ouvert à l'ambiante bien supérieur à celui de la C1, l'incorporation du catalyseur à déclenchement thermique lui offre une réactivité à 60°C identique voire légèrement meilleure.

C3 a une formule plus hydrophobe et légèrement plus lente que C2 ce qui permet de diminuer le moussage.

Le changement de colorant dans C4 par rapport à C3 permet aussi d'améliorer le moussage.

La résine R5 et Le Durcisseur D5 sont utilisés en bicartouche dans un rapport en volume de 1 pour 1, ce qui correspond à un nombre de fonction NCO sur un nombre de fonction (OH +NH) de 1.08. Cette composition adhésive nommée C5 est adaptée aux applications à temps ouverts longs mais pose des problèmes de bullages aux temps ouverts courts dans le cas précis de l'application pour l'assemblage de la barrière

C5 a une formule encore plus hydrophobe et plus lente que C4 et ne donne plus lieu à du moussage. Sa réactivité est ralentie en utilisant l'isocyanate MIPI

Dans C6 par rapport à C5 on ajoute un catalyseur à déclenchement thermique afin d'avoir un TC et TT satisfaisant à 30°C et une réticulation plus rapide en température. En comparant l'exemple C5 et C6 on constate que l'ajout du catalyseur permet d'accélérer très fortement la réticulation à chaud tout en maintenant un TO très long dans les deux cas.

Le temps ouvert est principalement contrôlé par la nature des isocyanates utilisés dans la partie B. On observe que les temps ouverts sont plus longs en présence de Lupranat® MIPI (C5 à C9) par rapport à la présence d' Isonate M143 seul (C1 à C4) du fait de la présence d'isomère 2,2' du MDI.

La résine R9 et Le Durcisseur D9 sont utilisés en bicartouche dans un rapport en volume de 1 pour 1, ce qui correspond à un nombre de fonction NCO sur un nombre de fonction (OH +NH) de 1,06. Cette composition adhésive nommée C9 répond à l'ensemble du cahier des charges.

| | tableau I | | Partie A (résine) | | | | | | | |
|---|---|---|---|---|---|---|---|---|---|---|
| | Noms Commerciaux (Fournisseurs) | Nature Chimique | R1 | R2 | R3 | R4 | R5 | R6 | R7 | R9 |
| a1 | Voranol CP 450 (Dow) | Polyol polyéther IOH = 380 mg KOH/g, F = 3, Mn = 443 | | 0,93% | 0,95% | 0,95% | 1,04% | 1,04% | 0,70% | 0,76% |
| a1 | Terathane 650 (Invista) | Polytétraméthylène glycol IOH = 174 mg KOH/g, F = 2, Mn = 644 | 11,10% | 11,18% | 5,28% | 5,29% ' | | | | |
| a2 | Capa 3050 (Solvay) | Polycaprolactone IOH = 310 mg KOH/g, F = 32, Mn = 540 | 11,93% | 12,02% | 11,18% | 11,19% | 11,16% | 11,16% | 11,26% | 10,78% |
| a2 | Huile de Ricin (Nidera) | Polyol végétal IOH = 164 mg KOH/g, F = 2,8, Mn = 958 | | | 10,69% | 10,71 % | 13,63% | 13,63% | 13,75% | 13,17% |
| a3 | PolyBd R45 HT (Arkema) | Polybutadiène à terminaisons hydroxylées IOH = 46 mg KOH/g, F = 2,8, Mn = 2800 | 0,18% | 0,18% | 0,16% | | | | | |
| ii | Isonate M 143 (Dow) | MDI oligomère % NCO = 29,2 , F = 2,2 | | | | | | | | 2,69% |
| b | Jeffamine T 403 (Huntsman) | Polyétheramine primaire Alc totale = 6,5 méq/g, F = 3, Mn = 461 | 1,35% | | | | | | | |
| b | Piperazine (Delamine | Diamine secondaire Alc totale = 23 méq/g, F = 2, M = 86 | | 0,50% | 0,51% | 0,51% | 0,56% | 0,56% | | 0,76% |
| c | Ethyl-2-hexane-1,3-diol (Krahn Chemie) | Diol (rallongeur de chaîne) IOH = 768 mg KOH/g, F = 2, M = 146 | 7,15% | 7,20% | 6,69% | 6,71% | 6,69% | 6,68% | 6,75% | 6,46% |
| d | UOP L Pâte (UOP) | Zéolite (50) | | | 10,23% | 10,25% | 11,38% | 11,38% | 11,48% | 10,99% |
| a2 | | Huile de ricin (50) | | | 10,23% | 10,25% | 11,38% | 11,38% | 11,48% | 10,99% |
| d | Siliporite SA 1720 (Arkema) | Zéolite synthétique | 2,97% | 2,99% | | | | | | |
| d | Craie BL 200 TB (Omya) | Carbonate de Calcium Diamètre moyen = 9 microns | 46,23% | 54,19% | | | | | | |
| d | Socal 312 (Solvay) | Carbonate de calcium hydrophobé Diamètre moyen = 1 micron | 13,52% | 6,01% | | | | | | |

EP 2 352 775 B1

(suite)

| tableau I | | Partie A (résine) | | | | | | | |
|---|---|---|---|---|---|---|---|---|---|
| Noms Commerciaux (Fournisseurs) | Nature Chimique | R1 | R2 | R3 | R4 | R5 | R6 | R7 | R9 |
| d | Mickhart C (La Provençale) | Carbonate de calcium hydrophobé Diamètre moyen = 2,5 microns | | | 39,98% | 40,05% | 39,94% | 39,92% | 40,29% | 38,57% |
| e | Unithox 420 (Baker Hughes) | Alcool gras éthoxylé | 0,47% | 0,47% | | | | | | |
| e | Byk 080 (Byk) | Composition antimousse à base de polymères et de polysiloxanes dans le polypropylène glycol | 0,27% | | 0,93% | 0,93% | 0,93% | 0,93% | 0,94% | 0,90% |
| e | Antiterra 204 (Byk) | Composition tensio-active à base de sel d'acide ecarboxylique et de polyamidoamine | 0,53% | | 0,09% | 0,09% | | | | |
| e | Jarysol XX (Arkema) | Mono et bis(xylyl)xylène | 4,26% | 4,26% | 1,86% | 1,86% | 1,86% | 1,86% | 1,87% | 1,79% |
| e | Noir de Fumée 101 poudre (Evonik) | Noir de Carbone | 0,04% | 0,04% | 0,04% | | | | | |
| e | Bleu Carburex G (Steiner) | 1,4-di-(n-butylamino)anthraquinone | | | | 0,05% | 0,05% | 0,05% | 0,05% | 0,04% |
| e | Thixatrol ST (Rheox/ Elementis) | Agent épaississant dérivé de l'huile de ricin | | | | | 1,39% | 1,39% | 1,41% | 1,35% |
| e | Aerosil R 202 (Evonik) | Agent épaississant de type silice pyrogénée | | | 1,16% | 1,16% | | | | 0,72% |
| f | Polycat SA 1/10 (Air Products) | 1,8-diazabicyclo[5,4,0]undécène-7 | | 0,02% | | | | 0,03% | 0,03% | 0,03% |
| | | | 100,00% | 100,00% | 100,00% | 100,00% | 100,00% | 100,00% | 100,00% | 100,00% |
| | | Caractéristiques partie A (résine) | | | | | | | | |
| Couleur | | | gris | gris | gris | bleu | bleu | bleu | bleu | bleu |
| Densité | | | 1,63 | 1,65 | 1,42 | 1,42 | 1,42 | 1,42 | 1,42 | 1,42 |
| Viscosité Brookfield (23°C, Aiguille 7, 20 tr/mn) en Pa.s | | | 53,0 | 27,0 | 28,0 | 23,0 | 35,8 | 32,2 | 32,0 | 30,0 |

| | tableau II | | Partie B (durcisseur) | | | | | | | |
|---|---|---|---|---|---|---|---|---|---|---|
| | Noms Commerciaux (Fournisseurs) | Nature Chimique | D1 | D2 | D3 | D4 | D5 | D6 | D7 | D9 |
| jj | Isonate M 143 (Dow) | MDI oligomère % NCO = 29,2, F = 2,2 | 58,85% | 58,85% | 59,79% | 59,79% | 28,36% | 28,36% | 28,36% | 26,47% |
| jj | Lupranat MIPI (Elastogran) | Mélange de MDI-2,4' et de MDI-4,4' (50/50) % NCO = 33,5, F = 2 | | | | | 28,36% | 28,36% | 28,36% | 26,47% |
| a1 | Terathan 650 (Dupont) | Polytétraméthylène glycol IOH = 174 mg KOH/g, F = 2, Mn = 644 | 28,66% | 28,66% | 29,11% | 29,11 % | 31,92% | 31,92% | 31,92% | 35,62% |
| h | Siliporite SA 1720 (Arkema) | Zéolite synthétique | 8,75% | 8,75% | 8,89% | 8,89% | 8,87% | 8,87% | 8,87% | 8,86% |
| i | Aerosil R 202 (Evonik) | Agent épaississant de type silice pyrogénée | 3,74% | 3,74% | 2,20% | 2,20% | 2,49% | 2,49% | 2,49% | 2,59% |
| | | | 100,00% | 100,00% | 100,00 % | 100,00 % | 100,00 % | 100,00 % | 100,00 % | 100,00% |
| | | | Caractéristiques Partie B (durcisseur) | | | | | | | |
| | Couleur | | beige | beige | beige | beige | beige | beige | beige | beige |
| | Densité | | 1,18 | 1,18 | 1,17 | 1,17 | 1,18 | 1,18 | 1,18 | 1,18 |
| | Viscosité Brookfield (23°C, Aiguille 7, 20 tr/mn) en Pa.s | | 38,0 | 38,0 | 22,0 | 22,0 | 25,0 | 25,0 | 25,0 | 26,0 |

| tableau III | compositions adhésives | Caractéristiques Mélange A /B (1/1 | | | | | | | |
|---|---|---|---|---|---|---|---|---|---|
| | | C1 | C2 | C3 | C4 | C5 | C6 | T7 | C9 |
| **rapport NCO / NH + OH** | | 1,13 | 1,07 | 1,1 | 1,09 | 1,08 | 1,08 | 1,14 | 1,06 |
| Durée de vie en pot à 23°C ou DVP (minutes) | | 40 | 64 | 95 | 83 | 133 | 120 | 117 | 100 |
| Viscosité Brookfield (23°C, Aiguille 7, 20 tr/mn) en Pa.s | | 62,0 | 54,6 | 57,6 | 48,2 | 57,2 | 52,8 | 26,0 | 80,0 |
| Coulure à 23°C | | faible | non | non | non | non | non | oui | non |
| Allongement à la rupture ou AR à 23°C (%) | | 152 +/- 5 | 151 +/- 5 | 166 +/- 7 | 169 +/- 13 | 141 +/- 16 | 149 +/- 4 | | 190 +/- 15 |
| Résistance à la rupture ou RR à 23°C (Mpa) | | 17.8 +/- 1.1 | 16.4 +/- 1.4 | 16.8 +/- 0.9 | 18.3 +/- 2 | 15.3 +/- 2 | 17.1 +/- 0.9 | | 18.3 +/- 2 |
| Module d'Young à 23°C (Mpa) | | 210 +/- 10 | 197 +/- 6 | 119 +/- 4 | 126 +/- 7 | 151 +/- 3 | 155 +/- 7 | | 148 +/- 7 |
| Résistance en traction-cisaillement INVAR / INVAR à 23°C et 50% HR (MPa) | | 22.4 +/- 1 | 22.7 +/- 1.7 | 17.2 +/- 1 | 19.6 +/- 1.2 | 20.7 +/- 1.2 | 22.7 +/- 0.9 | | 21.3 +/- 1.5 |
| Résistance en traction-cisaillement FSB / RSB à -170°C (MPa) | | 20,5 | 24,0 | 25,0 | 26,3 | 23,9 | 24,0 | | 22,0 |
| Temps ouvert des colles sur INVAR / INVAR à 23°C et 50% HR (minutes) | | 25 | 70 | 85 | 90 | > 120 | > 120 | | > 120 |
| Dureté Shore A (réactivité à chaud) | 2h à 60°C + 1h à 23°C | 80 | 81 | 63 | 63 | 19 | 75 | | 80 |
| | 2h à 60°C + 1j à 23°C | 89 | 87 | 76 | 77 | 57 | 80 | | 83 |
| | 2h à 60°C + 7j à 23°C | 93 | 93 | 88 | 87 | 85 | 86 | | 88 |
| | | Caractéristiques Application Manuelle FSB / RSB | | | | | | | |
| TC = 25 mn, TT = 45 mn à 30°C et 70% HR | Moussage | | oui | oui | faible | non | non | | non |
| | NPA (cm2) | | 0,163 | 0,024 | 0,061 | 0,000 | 0,001 | | 0,003 |
| TC=10mn,TT=15mnà30°C et 70% HR | Présence de bulles > 12 mm | non | non | oui | oui | oui | oui | oui | non |

**Revendications**

1. Utilisation d'une composition adhésive à base de polyuréthane bicomposant ayant une résistance au cisaillement mesurée selon la norme ISO 4587 qui est supérieure à 10 MPa sur toute la gamme de température allant de -170°C à +40°C, dans laquelle la composition adhésive à base de polyuréthane est située entre une membrane flexible (FSB) et une membrane rigide (RSB) pour former une structure multicouche, et dans laquelle la structure multicouche représente la barrière secondaire d'étanchéité d'une cuve intégrée dans une structure porteuse, d'une coque d'un navire destiné au transport par mer de gaz liquéfié ; et dans laquelle la composition adhésive est obtenue par réaction entre une partie A appelée résine et une partie B appelée durcisseur, la partie A étant représentée par le mélange comprenant les ingrédients :

   a) au moins un polyol choisi parmi les polyol polyéthers (a1), les polyols polyesters (a2), les polyols insaturés (a3), les pré polymère polyuréthannes thermoplastiques à terminaisons hydroxyles (a4), chacun des composants a1 à a4 ayant une masse moléculaire moyenne comprise entre 200 et 9000 g/mol et de fonctionnalité OH comprise entre 2 et 4,6 ; le polyol représentant de 20 à 60 % en poids de la partie A ;
   b) au moins un agent de seuil choisi parmi le groupe des amines ou polyamines, primaires ou secondaires ; l'agent de seuil représentant de 0,4 à 3 % en poids de la partie A,
   c) éventuellement un rallongeur de chaîne choisi parmi le groupe des diols de C2 à C10 ; le rallongeur de chaîne représentant de 0 à 10% en poids de la partie A ;
   d) des charges inorganiques; représentant de 22 à 70% en poids de la partie A ;
   e) au moins un additif choisi parmi le groupe des agents mouillants, des antimousses, des dispersants, des colorants, des agents épaississants, des agents fluidifiants ; représentant de 2 à 6 % en poids de la partie A ;
   f) éventuellement un catalyseur de réticulation à déclenchement thermique ; eeprésentant de 0 à 0,05% en poids de la partie A ;

   la partie B étant représentée par la composition comprenant les ingrédients:

   g) au moins un pré polymère polyuréthanne à terminaisons NCO de masse moléculaire moyenne comprise entre 840 et 2100 g/mol et de fonctionnalité NCO comprise entre 2 et 4 ; représentant de 75 à 100% en poids de la partie B ;
   h) éventuellement des charges inorganiques, représentent de 0 à 20% en poids de la partie B ;
   i) éventuellement au moins un additif choisi parmi le groupe des agents épaississants, des agents fluidifiants, représentant de 0 à 5 % en poids de la partie B ;

   et le rapport des fonctions NCO (meq/g) de la partie B sur la somme des fonctions réactives OH (meq/g) et NH (meq/g) de la partie A allant de 0,90 à 1,10.

2. Utilisation selon la revendication 1 dans laquelle les proportions des différents ingrédients sont les suivantes :

   a) le polyol représente 23 - 45 % ;
   b) l'agent de seuil représente de 0,5 à 1,5%;
   c) le rallongeur de chaîne représente de 4 à 8% ;
   d) les charges représentent de 35 à 65% ;
   e) les additifs représentent de 3 à 4%;
   f) le catalyseur représente de 0,01 à 0,04%;
   g) le pré polymère NCO représente de 85 à 90%;
   h) les charges inorganiques représentent de 5 à 15% ;
   i) les additifs représentent de 1 à 3%;

   et le rapport des fonctions NCO (meq/g) de la partie B sur la somme des fonctions réactives OH (meq/g) et NH (meq/g) de la partie A allant de 1,00 à 1,10.

3. Utilisation selon la revendication 1 ou 2, dans laquelle d) les charges inorganiques sont réparties entre 2 à 15% en poids de la partie A, de préférence 10 à 15% de tamis moléculaire, et de 20 à 65% en poids de la partie A, de préférence de 25 à 50% de charges minérales.

4. Utilisation selon l'une des revendications 1 à 3 dans laquelle le polyol a) de la partie A est au moins un pré polymère polyuréthanne thermoplastique à terminaisons OH (a4) choisis parmi les pré polymères polyuréthannes aliphatiques et aromatiques, et les mélanges de ces composés.

5. Utilisation selon l'une des revendications 1 à 4 dans laquelle la composition adhésive est obtenue par réaction de la partie A avec la partie B dans un rapport en volume A/B allant de environ 0,85 à environ 1,15 de préférence dans un rapport d'environ 1, et présente une viscosité initiale mesurée selon la norme ISO 2555, comprise entre 27 et 120 Pa.s, de préférence comprise entre 45 et 110 Pa.s ou encore 65 à 100 Pa. s.

6. Utilisation selon l'une des revendications 1 à 5 dans laquelle le composé b) est représenté par la piperazine et ses dérivés.

7. Utilisation selon l'une des revendications 1 à 6 dans laquelle le composé a) comprend au moins un polyol végétal de nature hydrophobe, représenté de préférence par l'huile de ricin et le composé d) comprend au moins une charge inorganique revêtue d'un enrobage hydrophobe, de préférence avec un tamis moléculaire.

8. Utilisation selon l'une des revendications 1 à 7 dans laquelle la composition adhésive a un temps ouvert allant de 90 minutes à 150 minutes, le temps ouvert étant le temps à partir duquel la valeur de résistance en cisaillement mesurée selon la norme ISO 4587 a perdu 20 % de sa valeur initiale.

9. Utilisation selon l'une des revendications 1 à 8 comprenant l'application de la composition adhésive, après extrusion, de façon manuelle ou automatique entre au moins une bande d'une membrane rigide et au moins une bande d'une membrane souple avec une épaisseur comprise entre 0,2 et 5 mm, dans des conditions climatiques de températures T et humidité relatives HR élevées, de préférence T supérieure à 25°C et HR supérieure à 55%, de préférence T comprise entre 28 et 40°C, et HR compris entre 60 et 85%.

**Patentansprüche**

1. Verwendung einer Klebstoffzusammensetzung auf Basis von Zweikomponenten-Polyurethan mit einer Scherfestigkeit, gemessen nach der Norm ISO 4587, die größer als 10 MPa in dem gesamten Temperaturbereich von -170°C bis +40°C ist, wobei die Klebstoffzusammensetzung auf Polyurethanbasis zwischen einer flexiblen Membran (FSB) und einer starren Membran (RSB) angeordnet ist, um eine mehrschichtige Struktur zu bilden, und wobei die mehrschichtige Struktur die zweite Dichtungsschranke einer Wanne darstellt, die in eine Tragstruktur eines Schiffsrumpfes, der für den Meerestransport von Flüssiggas bestimmt ist, integriert ist, und wobei die Klebstoffzusammensetzung durch Reaktion zwischen einem Teil A, Harz genannt, und einem Teil B, Härter genannt, erhalten wird,

wobei der Teil A durch das Gemisch dargestellt ist, das die folgenden Inhaltsstoffe umfasst:

a) mindestens ein Polyol, das ausgewählt ist unter den Polyol-Polyethern (a1), den Polyol-Polyestern (a2), den ungesättigten Polyolen (a3), den thermoplastischen hydroxylterminierten Präpolymerpolyurethanen(a4), wobei jeder dieser Bestandteile a1 bis a4 eine durchschnittliche Molekularmasse zwischen 200 und 9000 g/mol und eine OH-Funktionalität zwischen 2 und 4,6 aufweist; wobei das Polyol 20 bis 60 Gew.-% des Teils A darstellt;
b) mindestens einen Schwellenwirkstoff, der ausgewählt in der Gruppe der primären oder sekundären Amine oder Polyamine; wobei der Schwellenwirkstoff 0,4 bis 3 Gew.-% des Teils A darstellt,
c) eventuell einen Kettenverlängerer, der in der Gruppe der Diole von C2 bis C10 ausgewählt ist; wobei der Kettenverlängerer 0 bis 10 Gew.-% des Teils A darstellt;
d) anorganische Füllstoffe, die 22 bis 70 Gew.-% des Teils A darstellen;
e) mindestens einen Zusatzstoff, der in der Gruppe der Benetzungsmittel, der Entschäumer, der Dispergiermittel, der Farbstoffe, der Verdickungsmittel, der Verflüssigungsmittel ausgewählt ist; der 2 bis 6 Gew.-% des Teils A darstellt;
f) eventuell einen Vernetzungskatalysator mit thermischer Auslösung; der 0 bis 0,05 Gew.-% des Teils A darstellt;

wobei der Teil B durch die Zusammensetzung mit folgenden Inhaltsstoffen gebildet ist:

g) mindestens einem NCO-terminierten Präpolymerpolyurethan mit einer durchschnittlichen Molekularmasse zwischen 840 und 2100 g/mol und einer NCO-Funktionalität zwischen 2 und 4; das 75 bis 100 Gew.-% des Teils B darstellt;
h) eventuell anorganischen Füllstoffen, die 0 bis 20 Gew.-% des Teils B darstellen;
i) eventuell mindestens einem Zusatzstoff, der in der Gruppe der Verdickungsmittel, der Verflüssigungsmittel ausgewählt ist, der 0 bis 5 Gew.-% des Teils B darstellt;

wobei das Verhältnis der NCO-Funktionen (meq/g) des Teils B zur Summe der reaktiven OH- (meq/g) und NH-Funktionen (meq/g) des Teils A 0,90 bis 1,10 beträgt.

2. Verwendung nach Anspruch 1, bei der die Anteile der verschiedenen Inhaltsstoffe die folgenden sind:

   a) das Polyol stellt 23-45% dar;
   b) der Schwellenwirkstoff stellt 0,5 bis 1,5% dar;
   c) der Kettenverlängerer stellt 4 bis 8% dar;
   d) die Füllstoffe stellen 35 bis 65% dar;
   e) die Zusatzstoffe stellen 3 bis 4% dar;
   f) der Katalysator stellt 0,01 bis 0,04% dar;
   g) das Präpolymer NCO stellt 85 bis 90% dar;
   h) die anorganischen Füllstoffe stellen 5 bis 15% dar;
   i) die Zusatzstoffe stellen 1 bis 3% dar;

   und das Verhältnis der NCO-Funktionen (meq/g) des Teils B zur Summe der reaktiven OH- (meq/g) und NH-Funktionen (meq/g) des Teils A geht von 1,00 bis 1,10.

3. Verwendung nach Anspruch 1 oder 2, bei der d) die anorganischen Füllstoffe zwischen 2 bis 15 Gew.-% des Teils A, vorzugsweise 10 bis 15% Molekularsieb, und 20 bis 65 Gew.-% des Teils A, vorzugsweise 25 bis 50% mineralische Füllstoffe, aufgeteilt sind.

4. Verwendung nach einem der Ansprüche 1 bis 3, bei der das Polyol a) des Teils A mindestens ein thermoplastisches OH-terminiertes Präpolymerpolyurethan (a4) ist, ausgewählt unter den aliphatischen und aromatischen Präpolymerpolyurethanen und den Gemischen dieser Verbindungen.

5. Verwendung nach einem der Ansprüche 1 bis 4, bei der die Klebstoffzusammensetzung durch Reaktion des Teils A mit dem Teil B in einem Volumenverhältnis A/B von ungefähr 0,85 bis ungefähr 1,15, vorzugsweise in einem Verhältnis von ungefähr 1, erhalten wird, und eine anfängliche Viskosität, gemessen nach der Norm ISO 2555, zwischen 27 und 120 Pa.s, vorzugsweise zwischen 45 und 110 Pa.s oder auch 65 bis 100 Pa.s aufweist.

6. Verwendung nach einem der Ansprüche 1 bis 5, bei der die Verbindung b) von Piperazin und seinen Derivaten gebildet ist.

7. Verwendung nach einem der Ansprüche 1 bis 6, bei der die Verbindung a) mindestens ein pflanzliches Polyol hydrophober Natur umfasst, das vorzugsweise von Rizinusöl gebildet ist, und die Verbindung d) mindestens einen anorganischen Füllstoff umfasst, der mit einem hydrophoben Überzug bedeckt ist, vorzugsweise mit einem Molekularsieb.

8. Verwendung nach einem der Ansprüche 1 bis 7, bei der die Klebstoffzusammensetzung eine offene Zeit von 90 Minuten bis 150 Minuten hat, wobei die offene Zeit die Zeit ist, ab der der Scherfestigkeitswert, gemessen nach der Norm ISO 4587, 20% seines anfänglichen Werts verloren hat.

9. Verwendung nach einem der Ansprüche 1 bis 8, umfassend das Auftragen der Klebstoffzusammensetzung nach Extrusion manuell oder automatisch zwischen mindestens einem Streifen einer starren Membran und mindestens einem Streifen einer flexiblen Membran mit einer Dicke zwischen 0,2 und 5 mm unter Klimabedingungen von relativ hohen Temperaturen T und Feuchtigkeit HR, wobei vorzugsweise T höher als 25°C und HR höher als 55% ist, vorzugsweise T zwischen 28 und 40°C und HR zwischen 60 und 85% beträgt.

## Claims

1. Use of a two-component polyurethane-based adhesive composition having a shear strength measured according to the ISO 4587 standard which is greater than 10 MPa over the entire temperature range from -170°C to +40°C, in which the polyurethane-based adhesive composition is located between a flexible membrane (FSB) and a rigid membrane (RSB) in order to form a multilayer structure, and in which the multilayer structure represents the secondary sealing barrier of a tank integrated into a load-bearing structure, of a hull of a ship intended for transporting liquefied gas by sea; and in which the adhesive composition is obtained by reaction between a part A known as resin and a part B known as hardener;
part A being represented by the mixture comprising the ingredients:

a) at least one polyol chosen from polyether polyols (a1), polyester polyols (a2), unsaturated polyols (a3), hydroxyl-terminated thermoplastic polyurethane prepolymers (a4), each of the components a1 to a4 having an average molecular weight between 200 and 9000 g/mol and an OH functionality between 2 and 4.6; the polyol representing from 20 to 60% by weight of part A;
b) at least one consistency agent chosen from the group of primary or secondary amines or polyamines; the consistency agent representing from 0.4 to 3% by weight of part A;
c) optionally a chain extender chosen from the group of $C_2$ to $C_{10}$ diols; the chain extender representing from 0 to 10% by weight of part A;
d) inorganic fillers; representing from 22 to 70% by weight of part A;
e) at least one additive chosen from the group of wetting agents, anti-foaming agents, dispersants, colorants, thickening agents and fluidifying agents; representing from 2 to 6% by weight of part A;
f) optionally a thermally-initiated crosslinking catalyst; representing from 0 to 0.05% by weight of part A;

part B being represented by the composition comprising the ingredients:

g) at least one NCO-terminated polyurethane prepolymer having an average molecular weight between 840 and 2100 g/mol and an NCO functionality between 2 and 4; representing from 75 to 100% by weight of part B;
h) optionally inorganic fillers, representing from 0 to 20% by weight of part B;
i) optionally at least one additive chosen from the group of thickening agents and fluidifying agents, representing from 0 to 5% by weight of part B;
and the ratio of the NCO functional groups (meq/g) of part B to the sum of the reactive OH (meq/g) and NH (meq/g) functional groups of part A ranging from 0.90 to 1.10.

2. Use according to Claim 1, in which the proportions of the various ingredients are the following:

a) the polyol represents 23 - 45%;
b) the consistency agent represents from 0.5 to 1.5%;
c) the chain extender represents from 4 to 8%;
d) the fillers represent from 35 to 65%;
e) the additives represent from 3 to 4%;
f) the catalyst represents from 0.01 to 0.04%;
g) the NCO prepolymer represents from 85 to 90%;
h) the inorganic fillers represent from 5 to 15%;
i) the additives represent from 1 to 3%;

and the ratio of the NCO functional groups (meq/g) of part B to the sum of the reactive OH (meq/g) and NH (meq/g) functional groups of part A ranging from 1.00 to 1.10.

3. Use according to Claim 1 or 2, in which d) the inorganic fillers are distributed between 2 to 15%, preferably 10 to 15%, by weight of part A of molecular sieves and 20 to 65%, preferably 25 to 50%, by weight of part A of mineral fillers.

4. Use according to one of Claims 1 to 3, in which the polyol a) of part A is at least one OH-terminated thermoplastic polyurethane prepolymer (a4) chosen from aliphatic and aromatic polyurethane prepolymers, and mixtures of these compounds.

5. Use according to one of Claims 1 to 4, in which the adhesive composition is obtained by reaction of part A with part B in an A/B ratio by volume that ranges from around 0.85 to around 1.15, preferably in a ratio of around 1, and has an initial viscosity measured according to the ISO 2555 standard between 27 and 120 Pa.s, preferably between 45 and 110 Pa.s or else 65 to 100 Pa.s.

6. Use according to one of Claims 1 to 5, in which the compound b) is represented by piperazine and derivatives thereof.

7. Use according to one of Claims 1 to 6, in which the compound a) comprises at least one plant polyol of hydrophobic nature, represented preferably by castor oil and the compound d) comprises at least one inorganic filler coated with a hydrophobic coating, preferably with a molecular sieve.

8. Use according to one of Claims 1 to 7, in which the adhesive composition has an open time ranging from 90 minutes to 150 minutes, the open time being the time from which the value of the shear strength measured according to the ISO 4587 standard has lost 20% of its initial value.

9. Use according to one of Claims 1 to 8, comprising the application of the adhesive composition, after extrusion, manually or automatically between at least one strip of a rigid membrane and at least one strip of a flexible membrane with a thickness between 0.2 and 5 mm, under high temperature T and relative humidity RH climatic conditions, preferably T greater than 25°C and RH greater than 55%, preferably T between 28 and 40°C, and RH between 60 and 85%.

**Figure 1** : Assemblage mixte FSB/RSB dans le test de résistance au cisaillement

| | | |
|---|---|---|
| x | | Barrière secondaire (RSB ou FSB) |
| y | | Adhésif a tester |
| z | | Adhésif approprié |

**Figure 2 :** Description de l'application manuelle

Distribution de la colle | Application de la colle à la spatule | Pose du FSB | Marouflage | Pose des hots pads chauffant avec pression

*Squeeze out*

*Temps à la couverture TC max = 25 min*

*Temps total TT max = 45 min*

27

Figure 3 : Préparation d'éprouvettes H2

Figure 1 – Emporte-pièces pour éprouvettes haltères
Forme du tranchant

Tableau 1 – Emporte-pièces pour éprouvettes haltères
Dimension du tranchant

Dimension en millimètres

| Types d'éprouvette | A Longueur Totale | B Largeur des têtes | C Longueur de la partie étroite | D (1) Largeur de la partie étroite | E Petit rayon | F Grand rayon |
|---|---|---|---|---|---|---|
| Type H1 | 115 | 25 ± 1,0 | 33 ± 2,0 | 6 ± 0,4 | 14 ± 1,0 | 25 ± 2,0 |
| Type H2 | 75 | 12,5 ± 1,0 | 25 ± 1,0 | 4 ± 0,1 | 8 ± 0,5 | 12,5 ± 1,0 |
| Type H3 | 50 | 8,5 ± 1,0 | 17 ± 0,5 | 4 ± 0,1 | 7,5 ± 0,3 | 10 ± 0,3 |
| Type H4 | 35 | 6 ± 0,5 | 12 ± 0,5 | 2 ± 0,1 | 3 ± 0,1 | 3 ± 0,1 |
| (1) Les variations sur un seul et même emporte-pièces ne doivent pas dépasser 0,05 mm | | | | | | |

**Figure 4 :**   Préparation du test d'étanchéité.

**Figure 5** : Schéma en coupe d'une partie de la cuve étanche.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 200752961 A
- FR 2822814
- FR 28822814
- FR 2887010
- FR 2781557